(19)

Europäisches Patentamt

European Patent Office

Office européen des brevets

(11) **EP 3 450 352 A1**

(12) **EUROPEAN PATENT APPLICATION**

(43) Date of publication:
06.03.2019 Bulletin 2019/10

(51) Int Cl.:
*B65D 85/72* (2006.01)    *C09D 167/02* (2006.01)
*B65D 25/14* (2006.01)

(21) Application number: 17189078.3

(22) Date of filing: 01.09.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **PPG Industries Ohio, Inc.
Cleveland, OH 44111 (US)**

(72) Inventors:
• **SENEKER, Carl
  Milford, OH Ohio 45150 (US)**
• **LI, Qin
  Milford, OH Ohio 45150 (US)**
• **ZHANG, Wenchao
  Milford, OH Ohio 45150 (US)**
• **MILLERO, Edward
  Allison Park, PA Pennsylvania 15101 (US)**

(74) Representative: **Appleyard Lees IP LLP
15 Clare Road
Halifax HX1 2HY (GB)**

(54) **USE OF A COATING COMPOSITION**

(57) Use of a coating composition in the reduction or prevention of insufficient venting of a beverage can, the beverage can comprising a can body and a can end having a score line on said can end, wherein the coating composition comprises a polyester material having a glass transition temperature (Tg) of at least 55°C, and wherein the coating composition is applied to at least the internal surface of the can end over at least a portion of the score line.

**EP 3 450 352 A1**

## Description

The present invention relates to the use of a coating composition for the reduction or prevention of insufficient venting of a beverage can, in particular, to the use of a coating composition comprising a polyester material for the reduction or prevention of insufficient venting of a beverage can.

Beverage cans are known in the art and typically comprise a can body and at least one can end. For example, the beverage can may be in the form of a two-piece can comprising a can body having an integrated bottom portion and a can end attached thereto or the beverage can may be in the form of a three-piece can comprising a can body, such as a substantially cylindrical can body, and top and bottom can ends attached thereto. Can ends may have a score line thereon defining a portion of the can end to be opened such that, upon opening, the can contents can be removed, for example, by pouring. The score line facilitates shearing around the periphery of the portion of the can end to be opened and, therefore, facilitates removal of the portion of the can end to be opened.

In the case of beverage cans containing carbonated beverages, such as, for example, beer or soda, sufficient carbonated gas should be allowed to escape from the beverage can substantially immediately upon opening of the beverage can in order to prevent the build up of said gas within the beverage can. Upon opening a carbonated beverage can, the mechanical seal of the portion of the can to be opened is broken, i.e. the metal along the score line is sheared. However, the coating seal, i.e. the coating composition covering the score line, should also be simultaneously broken otherwise the coating composition may continue to cover the gap created upon breaking the mechanical seal thereby preventing carbonated gas escaping from the beverage can. The release of carbonated gas from the beverage can upon opening thereof is known as 'venting'. If insufficient venting occurs, i.e. if an insufficient amount of carbonated gas is released substantially immediately upon opening of the beverage can because the coating seal is not broken, pressure can build up within the beverage can leading to, for example, the coating seal eventually rupturing under the pressure and the beverage can exploding. Therefore, the periphery of the portion of the can end to be opened, i.e. the score line, should shear cleanly in order that sufficient venting may occur.

It is known to apply one or more coating compositions to an interior surface of a beverage can in order to, for example, protect the beverage can from the can contents. For example, the coating compositions may have good acid resistance to protect the beverage can from acidic can contents, such as acidic beverages.

Therefore, there is a desire to provide a coating composition for use in the opening of a beverage can that can reduce or prevent insufficient venting of the beverage by breaking cleanly, when the beverage can is opened.

According to a first aspect of the present invention there is provided the use of a coating composition in the reduction or prevention of insufficient venting of a beverage can, the beverage can comprising a can body and a can end having a score line on said can end, wherein the coating composition comprises a polyester material having a glass transition temperature (Tg) of at least 55°C, and wherein the coating composition is applied to at least the internal surface of the can end over at least a portion of the score line.

By "venting" and like terms as used herein is meant, unless specified otherwise, that a sufficient amount of gas, such as carbonated gas, is released substantially immediately upon opening of the beverage can to ensure that pressure does not build up within the beverage can. Suitably, sufficient gas, such as carbonated gas, is released substantially immediately upon opening of the beverage can such that the pressure on the inside of the beverage can is substantially equal to the pressure on the outside of the beverage can. The degree of venting may be measured according to the eversion test as follows: the contents of a 12 ounce (340g) can of soda which has been refrigerator cooled to 1.5°C is transferred into an empty 12 ounce (340g) beverage can. A CDL seamer is then used to seam a can end having a score line thereon onto the body of the can. The can is then placed upside down (i.e. with the can end being tested being at the bottom) in an incubator and incubated at 38°C for 18 hours. After this time, the can is removed from the incubator and transferred to a fume hood. A can opener or screwdriver is then used to open the beverage can such that the score line of the can end is compromised such that the mechanical seal shears. If a metal crack sound is heard with the pressure release 'hiss', there is no eversion and sufficient venting has occurred. This is considered to be a pass. If a metal crack sound is heard but the pressure is not released, there is eversion and sufficient venting has not occurred. This is considered to be a failure. The test is suitably repeated a number of times and the number of failures is recorded. For example, 2 failures out of 16 test repeats would be recorded as 2/16.

For the avoidance of doubt, by the term "opening of the beverage can" is meant that the score line of the can end is compromised such that the mechanical seal shears. The mechanical seal is that formed from the metal substrate from which the beverage can end is formed, for example, that formed by the can end having a score line thereon. In contrast, the coating seal is that formed from the coating composition(s) applied to the internal surface of the can end over at least a portion of the score line. The score line may be compromised by the application of a pushing and/or pulling force to the portion of the can end to be opened.

Advantageously, the use of the coating compositions of the present invention on the internal surface of the can end over at least a portion of the score line ensures that the mechanical seal shears or breaks substantially at the same time as the coating seal breaks or shears. In this way, insufficient venting is reduced or prevented.

The coating composition may have any suitable Young's modulus. The coating composition may have a Young's modulus of 0.5 to 3 gigapascal (GPa), suitably 1.0 to 2.5 GPa, such as 1.5 to 2.0 GPa. Suitably, the coating composition may have a Young's modulus of 1.8 GPa. The Young's modulus as reported herein is as measured by tensile strength testing of a free film according to ASTM D2370-16 "Tensile Properties of Organic Coatings": sample dimensions 122mm x 12mm x 10-20µm; strain rate 20mm/min; temperature 23°C. Advantageously, the use of a coating composition having a Young's modulus of 0.5 to 3 GPa means that the coating composition has an appropriate tensile strength such that it substantially fully shears in the region of the score line when the beverage can is opened. In this way sufficient venting is enabled.

The coating composition of the present invention comprises a polyester material. The polyester material may comprise any suitable polyester material. The polyester material may comprise the reaction product of a reaction mixture comprising a polyacid and a polyol.

"Polyacid" and like terms as used herein, refers to a compound having two or more carboxylic acid groups, such as two, three or four acid groups, and includes an ester of the polyacid (wherein one or more of the acid groups is esterified) or an anhydride. The polyacid is suitably an organic polyacid.

The carboxylic acid groups of the polyacid may be connected by a bridging group selected from: an alkylene group; an alkenylene group; an alkynylene group; or an arylene group.

The polyester material may be formed from any suitable polyacid. Suitable examples of polyacids include, but are not limited to the following: maleic acid; fumaric acid; itaconic acid; adipic acid; azelaic acid; succinic acid; sebacic acid; glutaric acid; decanoic diacid; dodecanoic diacid; phthalic acid; isophthalic acid; 5-tert-butylisophthalic acid; tetrachlorophthalic acid; tetrahydrophthalic acid; trimellitic acid; naphthalene dicarboxylic acid; naphthalene tetracarboxylic acid; terephthalic acid; hexahydrophthalic acid; methylhexahydrophthalic acid; dimethyl terephthalate; cyclohexane dicarboxylic acid; chlorendic anhydride; 1,3-cyclohexane dicarboxylic acid; 1,4-cyclohexane dicarboxylic acid; tricyclodecane polycarboxylic acid; endomethylene tetrahydrophthalic acid; endoethylene hexahydrophthalic acid; cyclohexanetetra carboxylic acid; cyclobutane tetracarboxylic; esters and anhydrides of all the aforementioned acids and combinations thereof.

Suitably, the carboxylic acid groups of the polyacid may be connected by an arylene bridging group. Thus, suitably, the polyacid may comprise an aromatic polyacid.

Suitably, the polyacid may comprise terephthalic acid, isophthalic acid, esters and anhydrides of the aforementioned acids and combinations thereof.

"Polyol" and like terms, as used herein, refers to a compound having two or more hydroxyl groups, such as two, three or four hydroxyl groups. The hydroxyl groups of the polyol may be connected by a bridging group selected from: an alkylene group; an alkenylene group; an alkynylene group; or an arylene group. Suitably the polyol is an organic polyol.

The polyester material may be formed from any suitable polyol. Suitable examples of polyols include, but are not limited to the following: alkylene glycols, such as ethylene glycol; propylene glycol; diethylene glycol; dipropylene glycol; triethylene glycol; tripropylene glycol; hexylene glycol; polyethylene glycol; polypropylene glycol and neopentyl glycol; hydrogenated bisphenol A; cyclohexanediol; propanediols including 1,2-propanediol; 1,3-propanediol; butyl ethyl propanediol; 2-methyl-1,3-propanediol; and 2-ethyl-2-butyl-1,3-propanediol; butanediols including 1,4-butanediol; 1,3-butanediol; 2,2,4,4-tetraalkyl-1,3-cyclobutanediol such as 2,2,4,4-tetramethyl-1,3-cyclobutanediol; and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-capro lactone and ethylene glycol); hydroxyalkylated bisphenols; polyether glycols, for example, poly(oxytetramethylene) glycol; trimethylol propane; pentaerythritol; di-pentaerythritol; trimethylol ethane; trimethylol butane; dimethylol cyclohexane; glycerol and the like or combinations thereof.

Suitably, the polyol may comprise cyclohexanedimethanol, 2-methyl-1,3-propanediol, ethylene glycol and combinations thereof.

The polyester material may be formed from a diacid. The polyester material may be formed from any suitable diacid. Suitable examples of diacids include, but are not limited to the following: phthalic acid; isophthalic acid; terephthalic acid; 1,4 cyclohexane dicarboxylic acid; succinic acid; adipic acid; azelaic acid; sebacic acid; fumaric acid; 2,6-naphthalene dicarboxylic acid; orthophthalic acid; phthalic anhydride; tetrahydrophthalic anhydride; maleic anhydride; succinic anhydride; itaconic anhydride; di-ester materials, such as dimethyl ester derivatives for example dimethyl isophthalate, dimethyl terephthalate, dimethyl 1,4-cyclohexane dicarboxylate, dimethyl 2,6-naphthalene di carboxylate, dimethyl fumarate, dimethyl orthophthalate, dimethylsuccinate, dimethyl glutarate, dimethyl adipate; esters and anhydrides of all the aforementioned acids; and mixtures thereof.

The polyester material may be formed from a diol. The polyester material may be formed from any suitable diol. Suitable examples of diols include, but are not limited to the following: ethylene glycol; 1,2-propane diol; 1,3-propane diol; 1,2-butanediol; 1,3-butandiol; 1,4-butandiol; but-2-ene 1,4-diol; 2,3-butane diol; 2-methyl 1,3-propane diol; 2,2'-dimethyl 1,3-propanediol (neopentyl glycol); 1,5 pentane diol; 3-methyl 1,5-pentanediol; 2,4-diethyl 1,5-pentane diol;

1,6-hexane diol; 2-ethyl 1,3-hexane diol; diethylene glycol; triethylene glycol; dipropylene glycol; tripropylene glycol; 2,2,4-trimethyl pentane 1,3-diol; 1,4 cyclohexane dimethanol; tricyclodecane dimethanol; 2,2,4,4-tetramethyl cyclobutane 1,3-diol; isosorbide; 1,4-cyclohexane diol; 1,1'-isopropylidene-bis (4-cyclohexanol); and mixtures thereof.

The polyester material may optionally be formed from additional monomers. The polyester material may optionally include an additional monomer selected from monoacids or monohydric alcohols or combinations thereof. Suitably, the optional additional monomer may be organic.

The polyester material may optionally be formed from additional monoacids. "Monoacid", and like terms as used herein, refers to compounds having one carboxylic acid group and includes an ester of the monoacid (where the acid group is esterified) or an anhydride. The monoacid is suitably an organic monoacid.

The polyester material may optionally be formed from any suitable additional monoacid. Suitable examples include, but are not limited to the following: benzoic acid; cyclohexane carboxylic acid; tricyclodecane carboxylic acid; camporic acid; benzoic acid; t-butyl benzoic acid; $C_1$-$C_{18}$ aliphatic carboxylic acids such as acetic acid; propanoic acid; butanoic acid; hexanoic acid; oleic acid; linoleic acid; undecanoic acid; lauric acid; isononanoic acid; fatty acids; hydrogenated fatty acids of naturally occurring oils; esters and/or anhydrides of any of the aforementioned acids and combinations thereof.

The polyester material may optionally be formed from additional monohydric alcohols. "Monohydric alcohol" and like terms as used herein, refers to compounds having one hydroxyl group. Suitably, the monohydric alcohol is an organic monohydric alcohol.

The polyester material may optionally be formed from any suitable additional monohydric alcohol. Suitable examples include but are not limited to the following: benzyl alcohol; hydroxyethoxybenzene; methanol; ethanol; propanol; butanol; pentanol; hexanol; heptanol; dodecyl alcohol; stearyl alcohol; oleyl alcohol; undecanol; cyclohexanol; phenol; phenyl carbinol; methylphenyl carbinol; cresol; monoethers of glycols; halogen-substituted or other substituted alcohols and combinations thereof.

The term "alk" or "alkyl", as used herein unless otherwise defined, relates to saturated hydrocarbon radicals being straight, branched, cyclic or polycyclic moieties or combinations thereof and contain 1 to 20 carbon atoms, suitably 1 to 10 carbon atoms, more suitably 1 to 8 carbon atoms, still more suitably 1 to 6 carbon atoms, yet more suitably 1 to 4 carbon atoms. These radicals may be optionally substituted with a chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, aryl or heteroatom, wherein $R^{19}$ to $R^{27}$ each independently represent hydrogen, aryl or alkyl, and/or be interrupted by oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as $-CH_3$, becomes methylene, $-CH_2-$, when represented as an alkylene. Other alkylene groups should be understood accordingly.

The term "alkenyl", as used herein, relates to hydrocarbon radicals having a double bond, suitably up to 4, double bonds, being straight, branched, cyclic or polycyclic moieties or combinations thereof and containing from 2 to 18 carbon atoms, suitably 2 to 10 carbon atoms, more suitably from 2 to 8 carbon atoms, still more suitably 2 to 6 carbon atoms, yet more suitably 2 to 4 carbon atoms. These radicals may be optionally substituted with a hydroxyl, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or alkyl, and/or be interrupted by oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, - CH=CH-, when represented as an alkenylene. Other alkenylene groups should be understood accordingly.

The term "alkynyl", as used herein, relates to hydrocarbon radicals having a triple bond, suitably up to 4, triple bonds, being straight, branched, cyclic or polycyclic moieties or combinations thereof and having from 2 to 18 carbon atoms, suitably 2 to 10 carbon atoms, more suitably from 2 to 8 carbon atoms, still more suitably from 2 to 6 carbon atoms, yet more suitably 2 to 4 carbon atoms. These radicals may be optionally substituted with a hydroxy, chloro, bromo, iodo, cyano, nitro, $OR^{19}$, $OC(O)R^{20}$, ,$C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or lower alkyl, and/or be interrupted by oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C≡CH, becomes ethynylene, -C≡C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, $OR^{19}$, $OC(O)R^{20}$, $C(O)R^{21}$, $C(O)OR^{22}$, $NR^{23}R^{24}$, $C(O)NR^{25}R^{26}$, $SR^{27}$, $C(O)SR^{27}$, $C(S)NR^{25}R^{26}$, or aryl, wherein $R^{19}$ to $R^{27}$ each independently represent hydrogen, aryl or lower alkyl, and/or be interrupted by oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

The polyester material has a glass transition temperature (Tg) of at least 55°C.

The polyester material may have a glass transition temperature (Tg) of at least 60°C.

The polyester material may have a glass transition temperature (Tg) of at least 65°C.

The polyester material may have a glass transition temperature (Tg) of at least 70°C.

The polyester material may have a glass transition temperature (Tg) of at least 75°C.

The polyester material may have a glass transition temperature (Tg) of at least 80°C.

The polyester material may have a glass transition temperature (Tg) of up to 200°C.

The polyester material may have a glass transition temperature (Tg) of up to 150°C.

The polyester material may have a glass transition temperature (Tg) of up to 120°C.

The polyester material may have a glass transition temperature (Tg) of up to 110°C.

The polyester material may have a glass transition temperature (Tg) of up to 105°C.

The polyester material may have a glass transition temperature (Tg) from 55 to 200°C, suitably from 55 to 150°C, such as from 55 to 120°C, such as from 55 to 110°C, or even from 55 to 105°C. The polyester material may have a glass transition temperature (Tg) from 65 to 200°C, suitably from 65 to 150°C, such as from 65 to 120°C, such as from 65 to 110°C, or even from 65 to 105°C. The polyester material may have a glass transition temperature (Tg) from 70 to 200°C, suitably from 70 to 150°C, such as from 70 to 120°C, such as from 70 to 110°C, or even from 70 to 105°C. The polyester material may have a glass transition temperature (Tg) from 75 to 200°C, suitably from 75 to 150°C, such as from 75 to 120°C, such as from 75 to 110°C, or even from 75 to 105°C. The polyester material may have a glass transition temperature (Tg) from 80 to 200°C, suitably from 80 to 150°C, such as from 80 to 120°C, such as from 80 to 110°C, or even from 80 to 105°C.

Suitably, the polyester material may have a glass transition temperature (Tg) from 80 to 90°C.

The glass transition temperature of the polyester material may be measured by any suitable method. Methods to measure Tg will be well known to a person skilled in the art. Suitably, and as reported herein, the Tg is measured using differential scanning calorimetry (DSC) using a Perkin Elmer Differential Scanning Calorimeter with a 10°C/min heating rate. The sample is placed in the machine and heated from 30°C to 180°C followed by a cooling ramp from 180°C to -50°C. Then, the sample is re-heated to 180°C. The Tg data is determined from the second heating ramp (i.e. from -50°C to 180°C). The Tg value is determined by the machine software installed by Perkin Elmer.

The polyester material may have any suitable number-average molecular weigh (Mn).

The polyester material may have an Mn of at least 500 Daltons (Da = g/mole).

The polyester material may have an Mn of at least 1000 Da.

The polyester material may have an Mn of at least 2,000 Da.

The polyester material may have an Mn of at least 3,000 Da.

The polyester material may have an Mn of at least 4,000 Da.

The polyester material may have an Mn of at least 5,000 Da.

The polyester material may have an Mn of at least 6,000 Da.

The polyester material may have an Mn of at least 7,000 Da.

The polyester material may have an Mn of at least 8,000 Da.

The polyester material may have an Mn of at least 9,000 Da.

The polyester material may have an Mn of at least 10,000 Da.

The polyester material may have an Mn of at least 15,000 Da.

The polyester material may have an Mn of up to 250,000 Da.

The polyester material may have an Mn of up to 200,000 Da.

The polyester material may have an Mn of up to 150,000 Da.

The polyester material may have an Mn of up to 100,000 Da.

The polyester material may have an Mn of up to 50,000 Da.

The polyester material may have an Mn of up to 25,000 Da.

The polyester material may have an Mn from 500 to 250,000 Da, suitably from 500 to 200,000 Da, such as from 500 to 150,000 Da, such as from 500 to 100,000 Da, such as from 500 to 50,000 Da, or even from 500 to 25,000 Da. The polyester material may have an Mn from 1,000 to 250,000 Da, suitably from 1,000 to 200,000 Da, such as from 1,000 to 150,000 Da, such as from 1,000 to 100,000 Da, such as from 1,000 to 50,000 Da, or even from 1,000 to 25,000 Da. The polyester material may have an Mn from 2,000 to 250,000 Da, suitably from 2,000 to 200,000 Da, such as from 2,000 to 150,000 Da, such as from 2,000 to 100,000 Da, such as from 2,000 to 50,000 Da, or even from 2,000 to 25,000 Da. The polyester material may have an Mn from 3,000 to 250,000 Da, suitably from 3,000 to 200,000 Da, such as from 3,000 to 150,000 Da, such as from 3,000 to 100,000 Da, such as from 3,000 to 50,000 Da, or even from 3,000 to 25,000 Da. The polyester material may have an Mn from 4,000 to 250,000 Da, suitably from 4,000 to 200,000 Da, such as from 4,000 to 150,000 Da, such as from 4,000 to 100,000 Da, such as from 4,000 to 50,000 Da, or even from 4,000 to 25,000 Da. The polyester material may have an Mn from 5,000 to 250,000 Da, suitably from 5,000 to 200,000 Da, such as from 5,000 to 150,000 Da, such as from 5,000 to 100,000 Da, such as from 5,000 to 50,000 Da, or even from 5,000 to 25,000 Da. The polyester material may have an Mn from 6,000 to 250,000 Da, suitably from 6,000 to 200,000 Da, such as from 6,000 to 150,000 Da, such as from 6,000 to 100,000 Da, such as from 6,000 to 50,000 Da, or even from 6,000 to 25,000 Da. The polyester material may have an Mn from 7,000 to 250,000 Da, suitably from 7,000 to 200,000 Da, such as from 7,000 to 150,000 Da, such as from 7,000 to 100,000 D, such as from 7,000 to 50,000 Da, or even from 7,000 to 25,000 Da. The polyester material may have an Mn from 8,000 to 250,000 Da, suitably from 8,000 to 200,000 Da, such as from 8,000 to 150,000 Da, such as from 8,000 to 100,000 Da, such as from 8,000 to 50,000 Da, or even from 8,000 to 25,000 Da. The polyester material may have an Mn from 9,000 to 250,000 Da, suitably from 9,000 to 200,000 Da, such as from 9,000 to 150,000 Da, such as from 9,000 to 100,000 Da, such as from 9,000 to 50,000 Da, or even from 9,000 to 25,000 Da. The polyester material may have an Mn from 10,000 to 250,000 Da, suitably from 10,000 to 200,000 Da, such as from 10,000 to 150,000 Da, such as from 10,000 to 100,000 Da, such as from 10,000 to 50,000 Da, or even from 10,000 to 25,000 Da. The polyester material may have an Mn from 15,000 to 250,000 Da, suitably from 15,000 to 200,000 Da, such as from 15,000 to 150,000 Da, such as from 15,000 to 100,000 Da, such as from 15,000 to 50,000 Da, or even from 15,000 to 25,000 Da.

Suitably, the polyester material may have an Mn from 10,000 to 25,000 Da.

The number-average molecular weight (Mn) may be measured by any suitable method. Techniques to measure the number-average molecular weight will be well known to a person skilled in the art. Suitably, and as reported herein, the Mn may be determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector: 254nm; solvent: unstabilised THF; retention time marker: toluene; sample concentration: 2mg/ml).

The polyester material may have any suitable weight-average molecular weight (Mw).

The polyester material may have an Mw of at least 500 Daltons (Da = g/mole).

The polyester material may have an Mw of at least 1000 Da.

The polyester material may have an Mw of at least 2,000 Da.

The polyester material may have an Mw of at least 3,000 Da.

The polyester material may have an Mw of at least 4,000 Da.

The polyester material may have an Mw of at least 5,000 Da.

The polyester material may have an Mw of at least 6,000 Da.

The polyester material may have an Mw of at least 7,000 Da.

The polyester material may have an Mw of at least 8,000 Da.

The polyester material may have an Mw of at least 9,000 Da.

The polyester material may have an Mw of at least 10,000 Da.

The polyester material may have an Mw of at least 15,000 Da.

The polyester material may have an Mw of up to 1,250,000 Da.

The polyester material may have an Mw of up to 1,000,000 Da.

The polyester material may have an Mw of up to 750,000 Da.

The polyester material may have an Mn of up to 500,000 Da.

The polyester material may have an Mw of up to 250,000 Da.

The polyester material may have an Mw of up to 200,000 Da.

The polyester material may have an Mw of up to 150,000 Da.

The polyester material may have an Mw of up to 100,000 Da.

The polyester material may have an Mw of up to 50,000 Da.

The polyester material may have an Mw of up to 25,000 Da.

The polyester material may have an Mw from 500 to 1,250,000 Da, suitably from 500 to 1,000,000 Da, such as from 500 to 750,000 Da, such as from 500 to 500,000 Da, such as from 500 to 250,000 Da, such as from 500 to 200,000 Da, such as from 500 to 150,000 Da, such as from 500 to 100,000 Da, such as from 500 to 50,000 Da, or even from 500 to 25,000 Da. The polyester material may have an Mw from 1,000 to 1,250,000 Da, suitably from 1,000 to 1,000,000 Da, such as from 1,000 to 750,000 Da, such as from 1,000 to 500,000 Da, such as from 1,000 to 250,000 Da, such as from 1,000 to 200,000 Da, such as from 1,000 to 150,000 Da, such as from 1,000 to 100,000 Da, such as from 1,000 to 50,000 Da, or even from 1,000 to 25,000 Da. The polyester material may have an Mw from 2,000 to 1,250,000 Da, suitably from 2,000 to 1,000,000 Da, such as from 2,000 to 750,000 Da, such as from 2,000 to 500,000 Da, such as from 2,000 to 250,000 Da, such as from 2,000 to 200,000 Da, such as from 2,000 to 150,000 Da, such as from 2,000 to 100,000 Da, such as from 2,000 to 50,000 Da, or even from 2,000 to 25,000 Da. The polyester material may have an Mw from 3,000 to 1,250,000 Da, suitably from 3,000 to 1,000,000 Da, such as from 3,000 to 750,000 Da, such as from 3,000 to 500,000 Da, such as from 3,000 to 250,000 Da, such as from 3,000 to 200,000 Da, such as from 3,000 to 150,000 Da, such as from 3,000 to 100,000 Da, such as from 3,000 to 50,000 Da, or even from 3,000 to 25,000 Da. The polyester material may have an Mw from 4,000 to 1,250,000 Da, suitably from 4,000 to 1,000,000 Da, such as from 4,000 to 750,000 Da, such as from 4,000 to 500,000 Da, such as from 4,000 to 250,000 Da, such as from 4,000 to 200,000 Da, such as from 4,000 to 150,000 Da, such as from 4,000 to 100,000 Da, such as from 4,000 to 50,000 Da, or even from 4,000 to 25,000 Da. The polyester material may have an Mw from 5,000 to 1,250,000 Da, suitably from 5,000 to 1,000,000 Da, such as from 5,000 to 750,000 Da, such as from 5,000 to 500,000 Da, such as from 5,000 to 250,000 Da, such as from 5,000 to 200,000 Da, such as from 5,000 to 150,000 Da, such as from 5,000 to 100,000 Da, such as from 5,000 to 50,000 Da, or even from 5,000 to 25,000 Da. The polyester material may have an Mw from 6,000 to 1,250,000 Da, suitably from 6,000 to 1,000,000 Da, such as from 6,000 to 750,000 Da, such as from 6,000 to 500,000 Da, such as from 6,000 to 250,000 Da, such as from 6,000 to 200,000 Da, such as from 6,000 to 150,000 Da, such as from 6,000 to 100,000 Da, such as from 6,000 to 50,000 Da, or even from 6,000 to 25,000 Da. The polyester material may have an Mw from 7,000 to 1,250,000 Da, suitably from 7,000 to 1,000,000 Da, such as from 7,000 to 750,000 Da, such as from 7,000 to 500,000 Da, such as from 7,000 to 250,000 Da, such as from 7,000 to 200,000 Da, such as from 7,000 to 150,000 Da, such as from 7,000 to 100,000 D, such as from 7,000 to 50,000 Da, or even from 7,000 to 25,000 Da. The polyester material may have an Mw from 8,000 to 1,250,000 Da, suitably from 8,000 to 1,000,000 Da, such as from 8,000 to 750,000 Da, such as from 8,000 to 500,000 Da, such as from 8,000 to 250,000 Da, such as from 8,000 to 200,000 Da, such as from 8,000 to 150,000 Da, such as from 8,000 to 100,000 Da, such as from 8,000 to 50,000 Da, or even from 8,000 to 25,000 Da. The polyester material may have an Mw from 9,000 to 1,250,000 Da, suitably from 9,000 to 1,000,000 Da, such as from 9,000 to 750,000 Da, such as from 9,000 to 500,000 Da, such as from 9,000 to 250,000 Da, such as from 9,000 to 200,000 Da, such as from 9,000 to 150,000 Da, such as from 9,000 to 100,000 Da, such as from 9,000 to 50,000 Da, or even from 9,000 to 25,000 Da. The polyester material may have an Mw from 10,000 to 1,250,000 Da, suitably from 10,000 to 1,000,000 Da, such as from 10,000 to 750,000 Da, such as from 10,000 to 500,000 Da, such as from 10,000 to 250,000 Da, such as from 10,000 to 200,000 Da, such as from 10,000 to 150,000 Da, such as from 10,000 to 100,000 Da, such as from 10,000 to 50,000 Da, or even from 10,000 to 25,000 Da. The polyester material may have an Mw from 15,000 to 1,250,000 Da, suitably from 15,000 to 1,000,000 Da, such as from 15,000 to 750,000 Da, such as from 15,000 to 500,000 Da, such as from 15,000 to 250,000 Da, such as from 15,000 to 200,000 Da, such as from 15,000 to 150,000 Da, such as from 15,000 to 100,000 Da, such as from 15,000 to 50,000 Da, or even from 15,000 to 25,000 Da.

Suitably, the polyester material may have an Mw substantially equal to the Mn of the polyester or may have an Mw of up to five (5) times the Mn of the polyester material, such as up to three (3) times the Mn of the polyester material.

A person skilled in the art will appreciate that techniques to measure the number-average molecular weight may also be applied to measure the weight-average molecular weight. The weight-average molecular weight (Mw) may be measured by any suitable method. Techniques to measure the weight-average molecular weight will be well known to a person skilled in the art. Suitably, and as reported herein, the Mw may be determined by gel permeation chromatography using a polystyrene standard according to ASTM D6579-11("Standard Practice for Molecular Weight Averages and Molecular Weight Distribution of Hydrocarbon, Rosin and Terpene Resins by Size Exclusion Chromatography". UV detector: 254nm; solvent: unstabilised THF; retention time marker: toluene; sample concentration: 2mg/ml).

The polyester material may have any suitable gross hydroxyl value (OHV).

The polyester material may have a gross OHV of at least 0 mg KOH/g.

The polyester material may have an OHV of at least 5 mg KOH/g.

The polyester material may have an OHV of at least 10 mg KOH/g.

The polyester material may have an OHV of up to 150 mg KOH/g.

The polyester material may have an OHV of up to 120 mg KOH/g.

The polyester material may have an OHV of up to 110 mg KOH/g.

The polyester material may have an OHV of up to 100 mg KOH/g.

The polyester material may have an OHV from 0 to 150 mg KOH/g, suitably from 0 to 120 mg KOH/g, such as from 0 to 110 mg KOH/g, or even from 0 to 100 mg KOH/g. The polyester material may have an OHV from 5 to 150 mg KOH/g, suitably from 5 to 120 mg KOH/g, such as from 5 to 110 mg KOH/g, or even from 5 to 100 mg KOH/g. The polyester material may have an OHV from 10 to 150 mg KOH/g, suitably from 10 to 120 mg KOH/g, such as from 10 to 110 mg KOH/g, or even from 10 to 100 mg KOH/g.

Suitably, the gross hydroxyl value (OHV) is expressed on solids.

The gross hydroxyl value (OHV) of the polyester material may be measured by any suitable method. Methods to measure OHV will be well known to a person skilled in the art. Suitably, and as reported herein, the hydroxyl value is the number of mg of KOH equivalent to the hydroxyl groups in 1g of material. In such a method, suitably, a sample of solid polyester (0.13g) is weighed accurately into a conical flask and is dissolved, using light heating and stirring as appropriate, in 20ml of tetrahydrofuran. 10ml of 0.1M 4-(dimethylamino)pyridine in tetrahydrofuran (catalyst solution) and 5ml of a 9 vol% solution of acetic anhydride in tetrahydrofuran (i.e. 90ml acetic anhydride in 910ml tetrahydrofuran; acetylating solution) are then added to the mixture. After 5 minutes, 10ml of an 80 vol% solution of tetrahydrofuran (i.e. 4 volume parts tetrahydrofuran to 1 part distilled water; hydrolysis solution) is added. After 15 minutes, 10ml tetrahydrofuran is added and the solution is titrated with 0.5M ethanolic potassium hydroxide (KOH). A blank sample is also run where the sample of solid polyester is omitted. The resulting hydroxyl number is expressed in units of mg KOH/g and is calculated using the following equation:

$$\text{Hydroxyl value} = \frac{(V_2 - V_1) \times \text{molarity of KOH solution (M)} \times 56.1}{\text{weight of solid sample (g)}}$$

wherein $V_1$ is the titre of KOH solution (ml) of the polyester sample and $V_2$ is the titre of KOH solution (ml) of the blank sample. All values for gross hydroxyl value reported herein were measured in this way.

The polyester material may have any suitable acid number (AN).

The polyester material may have an AN of at least 0 mg KOH/g.

The polyester material may have an AN of at least 5 mg KOH/g.

The polyester material may have an AN of at least 10 mg KOH/g.

The polyester material may have an AN of up to 150 KOH/g.

The polyester material may have an AN of up to 100 mg KOH/g.

The polyester material may have an AN of up to 50 mg KOH/g.

The polyester material may have an AN from 0 to 150 mg KOH/g, suitably from 0 to 100 mg KOH/g, such as from 0 to 50 mg KOH/g. The polyester material may have an AN from 5 to 150 mg KOH/g, suitably from 5 to 100 mg KOH/g, such as from 5 to 50 mg KOH/g. The polyester material may have an AN from 10 to 150 mg KOH/g, suitably from 10 to 100 mg KOH/g, such as from 10 to 50 mg KOH/g.

Suitably, the acid number (AN) is expressed on solids.

The acid number (AN) of the polyester material may be measured by any suitable method. Methods to measure AN will be well known to a person skilled in the art. Suitably, and as reported herein, the AN is determined by titration with 0.1M methanolic potassium hydroxide (KOH) solution. In such a method, a sample of solid polyester (0.1g) is weighed accurately into a conical flask and is dissolved, using light heating and stirring as appropriate, in 25ml of dimethyl formamide containing phenolphthalein indicator. The solution is then cooled to room temperature and titrated with the 0.1M methanolic potassium hydroxide solution. The resulting acid number is expressed in units of mg KOH/g and is calculated using the following equation:

$$\text{Acid number} = \frac{\text{titre of KOH solution (ml)} \times \text{molarity KOH solution (M)} \times 56.1}{\text{weight of solid sample (g)}}$$

All values for acid number reported herein were measured in this way.

The polyester material may comprise the reaction product of a reaction mixture comprising;

(i) 1,2-propanediol,
(ii) terephthalic acid, and
(iii) a molecular weight increasing agent,

wherein the polyester material has a number-average molecular weight (Mn) of at least 6,100 Da and a glass transition temperature (Tg) of at least 80 °C.

By "molecular weight increasing agent" we mean a substance that increases the number-average molecular weight (Mn) of the polyester material.

The molecular weight increasing agent may be any suitable compound capable of increasing the Mn of the first polyester material. Suitably, the molecular weight increasing agent may comprise a polyacid, a polyol or combinations thereof.

The molecular weight increasing agent may comprise a polyacid. Suitably, the molecular weight increasing agent may comprise a diacid.

The molecular weight increasing agent comprises a diacid of general formula (I)

$$ROOC-X_n-COOR \qquad \text{formula (I)}$$

wherein each R independently represents hydrogen or an alkyl, alkenyl, alkynyl, or aryl group; n = 0 or 1; and wherein X represents a bridging group selected from: an alkylene group; an alkenylene group; an alkynylene group; an arylene group; wherein the bridge between the - COOR groups is $C_1$ or $C_2$.

Suitable examples of polyacid molecular weight increasing agents include, but are not limited to the following: oxalic acid; malonic acid; succinic acid; orthophthalic acid; maleic acid; fumaric acid; itaconic acid; methylmalonic acid; ethylmalonic acid; propylmalonic acid; 2-methylsuccinic acid; 2-ethylsuccinic acid; 2-propylsuccinic acid; trans-cyclopentane-1,2-dicaboxylic acid; cis- cyclopentane-1,2-dicaboxylic acid; trans-cyclohexane-1,2-dicaboxylic acid; cis-cyclohexane-1,2-dicaboxylic acid; acids and anhydrides of all the aforementioned acids and combinations thereof. The polyacid molecular weight increasing agents may comprise maleic anhydride, itaconic acid or a combination thereof.

Suitably, the polyacid molecular weight increasing agent may comprise maleic anhydride.

The molecular weight increasing agent may comprise a polyol. Suitably, the molecular weight increasing agent may comprise a triol.

The hydroxyl groups of the polyol molecular weight increasing agents may be connected by a $C_1$ to $C_3$ alkylene group. The $C_1$ to $C_3$ alkylene group may be substituted or unsubstituted. The $C_1$ to $C_3$ alkylene group may be optionally substituted with the following: halo; hydroxyl; nitro; mercapto; amino; alkyl; alkoxy; aryl; sulfo and sulfoxy groups. The $C_1$ to $C_3$ alkylene group may be linear or branched. The $C_1$ to $C_3$ alkylene group may be saturated or unsaturated.

Suitably, there may be no more than 3 carbon atoms connecting between the hydroxyl groups.

Suitable examples of polyol molecular weight increasing agents include, but are not limited to the following: methylene glycol; ethylene glycol; propylene glycol; neopentyl glycol; 1,2-propanediol; butyl ethyl propanediol; 2-methyl-1,3-propanediol; 2-ethyl-2-butyl-1,3-propanediol; trimethylolmethane; trimethylolethane; trimethylolpropane; glycerol; pentaerythritol; and combinations thereof. Suitably, the polyol molecular weight increasing agent comprises trimethylolpropane.

The terephthalic acid (ii) may be in any suitable form. It will be well known to a person skilled in the art that terephthalic acid is often provided in a form which also contains isophthalic acid as a contaminant. However, the terephthalic acid may be provided in a form which is substantially free of isophthalic acid. By "substantially free" we mean to refer to terephthalic acid which contains less than 5 wt% isophthalic acid, preferably less than 2 wt% isophthalic acid, more preferably less than 0.05 wt% isophthalic acid. The terephthalic acid may contain 0 wt% isophthalic acid.

The polyester material may comprise any suitable molar ratio of (i)+(ii):(iii). The molar ratio of (i)+(ii):(iii) may range from 100:1 to 1:1, such as from 80:1 to 5:1. As a non-limiting example, when the molecular weight increasing agent is a polyacid the molar ratio of (i)+(ii):(iii) may be 25:1. As a further non-limiting example, when the molecular weight increasing agent is a polyol the molar ratio of (i)+(ii):(iii) may be 80:1

The polyester material may have a low degree of branching. The polyester material may be substantially linear or be slightly branched. For example, the degree of branching of the polyester material, may be measured by the polydispersity index of the said high molecular weight polyester material. The polydispersity index of a polymer is given by the ratio of Mw to Mn (Mw/Mn), wherein Mw is the weight-average molecular weight and Mn is the number average molecular weight. Suitably, the polydispersity index of the polyester material is from 1 to 20, suitably from 1 to 10.

The polyester material may have a molecular weight above the entanglement molecular weight of said polyester material.

"Entanglement molecular weight" and like terms, as used herein, refers to the molecular weight at which the first polyester material becomes large enough to entangle. For the avoidance of doubt the molecular weight may be the number-average molecular weight or the weight-average molecular weight. Entanglement molecular weight is typically defined as the molecular weight at which the physical properties, especially the viscosity of the polyester material, change.

Typically, the entanglement molecular weight is determined by plotting the log of the melt viscosity against the log of the molecular weight of a polymer. Typically, as the molecular weight increases, the plot follows a gently upward sloping linear path. However, once the entanglement molecular weight is reached, the gently sloping linear path increases to a rapidly sloping linear path. Hence the entanglement molecular weight may be determined as the point on the plot where the slope changes from gently sloping to rapidly sloping.

Techniques to measure the melt viscosity will be well known to a person skilled in the art. Suitably, and as reported herein, the melt viscosity may be measured at a high shear rate such as that applied by a cone and plate rheometer, typical methods are as described in standard methods such as ASTM D4287. Films formed from the first polyester material having a molecular weight above the critical entanglement molecular weight of the said first polyester material, were found to have superior film forming properties.

The components (i), (ii) and (iii) of the polyester material may be contacted in any order.

The polyester material may be prepared in a one step process. Suitably, in a one step process, the components (i), (ii) and (iii) are all reacted together at the same time. Suitably, the polyester material may be prepared in a one step process where the molecular weight increasing agent comprises a polyol.

Suitably, in a one step process, components (i), (ii) and (iii) may be contacted together at a first reaction temperature, T1, wherein T1 may be a temperature of 90°C to 260°C, suitably from 200°C to 250°C, such as from 200°C to 230°C.

Typically, in a one step process, the reaction is allowed to proceed for a total period of 1 minute to 100 hours, such as from 2 hours to 80 hours. It will be appreciated by a person skilled in the art that the reaction conditions may be varied depending on the reactants used.

Suitably, the polyester material may have a glass transition temperature (Tg) of 80 to 100°C, such as 80 to 90°C, or even 80 to 85°C.

The polyester material may comprise a commercially available polyester material. Suitable commercially available polyester materials include, but are not limited to the following: those sold under the trade name VYLON (registered trade mark) such as VYLON GK880 (commercially available from Toyobo); those sold under the trade name URALAC (RTM) commercially available from DSM, such as URALAC SN 800, URALAC SN 805, URALAC SN 808, URALAC SN 842, URALAC SN 859, URALAC SN 860, URALAC SN 905, URALAC 908, URALAC 989 or URALAC SN 978; those sold under the trade name ITALKID (RTM) commercially available from Galstaff-Multiresine, such as ITALKID 212, ITALKID 218, ITALKID 226, ITALKID 228, ITALKID 231 or ITALKID 300; those sold under the trade name DOMOPOL (RTM) commercially available from Helios, such as DOMOPOL 5101, DOMOPOL 5102, DOMOPOL 5111, DOMOPOL 5112, DOMOPOL 5113, DOMOPOL 5117, DOMOPOL 5132; those sold under the trade name DYNAPOL (RTM) commercially available from Evonik, such as DYNAPOL LH 318, DYNAPOL LH 818, DYNAPOL LH 820, DYNAPOL LH 823, DYNAPOL LH 830, DYNAPOL LH 833, DYNAPOL L 912, DYNAPOL L 952, DYNAPOL L 206, DYNAPOL L 860 or DYNAPOL L 600; those sold under the trade name URALAC (RTM) commercially available from DSM, such as URALAC P1580, URALAC 4215, URALAC 5080, URALAC 5930 or URALAC 6024; those sold under the trade name URADIL (RTM) commercially available from DSM, such as URADIL 250, URADIL 255, URADIL 258, URADIL SZ 260 or URADIL SZ 262; those sold under the trade name ITALESTER (RTM) commercially available from Galstaff-Multiresine, such as ITALESTER 217 or ITALESTER 218; and combinations thereof.

Suitably, the polyester material may comprise a commercially available polyester material sold under the trade name VYLON (registered trade mark) such as, for example, VYLON GK880 (commercially available from Toyobo).

Suitably, the polyester material may comprise VYLON GK880 (commercially available from Toyobo).

The polyester material may be present in the coating composition in any suitable amount.

The coating composition may comprise at least 10 wt% polyester material based on the total solid weight of the coating composition.

The coating composition may comprise at least 20 wt% polyester material based on the total solid weight of the coating composition.

The coating composition may comprise at least 30 wt% polyester material based on the total solid weight of the coating composition.

The coating composition may comprise at least 40 wt% polyester material based on the total solid weight of the coating composition.

The coating composition may comprise at least 50 wt% polyester material based on the total solid weight of the coating composition.

The coating composition may comprise at least 60 wt% polyester material based on the total solid weight of the coating composition.

The coating composition may comprise at least 70 wt% polyester material based on the total solid weight of the coating composition.

The coating composition may comprise up to 99 wt% polyester material based on the total solid weight of the coating composition.

The coating composition may comprise up to 95 wt% polyester material based on the total solid weight of the coating composition.

The coating composition may comprise up to 90 wt% polyester material based on the total solid weight of the coating composition.

The coating composition may comprise up to 80 wt% polyester material based on the total solid weight of the coating composition.

The coating composition may comprise from 10 to 99 wt%, suitably from 10 to 95 wt%, such as from 10 to 90 wt%, or even from 10 to 80 wt% polyester material based on the total solid weight of the coating composition. The coating composition may comprise from 20 to 99 wt%, suitably from 20 to 95 wt%, such as from 20 to 90 wt%, or even from 20 to 80 wt% polyester material based on the total solid weight of the coating composition. The coating composition may comprise from 30 to 99 wt%, suitably from 30 to 95 wt%, such as from 30 to 90 wt%, or even from 30 to 80 wt% polyester material based on the total solid weight of the coating composition. The coating composition may comprise from 40 to 99 wt%, suitably from 40 to 95 wt%, such as from 40 to 90 wt%, or even from 40 to 80 wt% polyester material based on the total solid weight of the coating composition. The coating composition may comprise from 50 to 99 wt%, suitably from 50 to 95 wt%, such as from 50 to 90 wt%, or even from 50 to 80 wt% polyester material based on the total solid weight of the coating composition. The coating composition may comprise from 60 to 99 wt%, suitably from 60 to 95 wt%, such as from 60 to 90 wt%, or even from 60 to 80 wt% polyester material based on the total solid weight of the coating composition. The coating composition may comprise from 70 to 99 wt%, suitably from 70 to 95 wt%, such as from 70 to 90 wt%, or even from 70 to 80 wt% polyester material based on the total solid weight of the coating composition.

Suitably, the coating composition may comprise from 70 to 80 wt% polyester material based on the total solid weight of the coating composition.

The coating composition may comprise a further polyester material. Therefore, the coating composition of the present invention may comprise a first polyester material having a glass transition temperature (Tg) of at least 50°C and a second polyester material.

Thus, according to a second aspect of the present invention there is provided the use of a coating composition in the reduction or prevention of insufficient venting of a beverage can, the beverage can comprising a can body and a can end having a score line on said can end, wherein the coating composition comprises a polyester material having a glass transition temperature (Tg) of at least 55°C and a second polyester material and wherein the coating composition is applied to at least the internal surface of the can end over at least a portion of the score line.

Suitable features of the second aspect of the present invention are as described above in relation to the first aspect of the present invention. The first polyester material of the second aspect of the present invention is as described above in relation to the first aspect of the present invention.

The second polyester material may be any suitable polyester material. The second polyester material may comprise the reaction product of a polyacid and a polyol.

The polyacid of the second polyester material is suitably an organic polyacid.

The carboxylic acid groups of the polyacid of the second polyester material may be connected by a bridging group selected from: an alkylene group; an alkenylene group; an alkynylene group; or an arylene group.

The second polyester material may be formed from any suitable polyacid. Suitable examples of polyacids include, but are not limited to the following: maleic acid; fumaric acid; itaconic acid; adipic acid; azelaic acid; succinic acid; sebacic acid; glutaric acid; decanoic diacid; dodecanoic diacid; phthalic acid; isophthalic acid; 5-tert-butylisophthalic acid; tetrachlorophthalic acid; tetrahydrophthalic acid; trimellitic acid; naphthalene dicarboxylic acid; naphthalene tetracarboxylic acid; terephthalic acid; hexahydrophthalic acid; methylhexahydrophthalic acid; dimethyl terephthalate; cyclohexane dicarboxylic acid; chlorendic anhydride; 1,3-cyclohexane dicarboxylic acid; 1,4-cyclohexane dicarboxylic acid; tricyclodecane polycarboxylic acid; endomethylene tetrahydrophthalic acid; endoethylene hexahydrophthalic acid; cyclohexanetetra carboxylic acid; cyclobutane tetracarboxylic; esters and anhydrides of all the aforementioned acids and combinations thereof.

The second polyester material may be formed from a diacid. The second polyester material may be formed from any suitable diacid. Suitable examples of diacids include, but are not limited to the following: phthalic acid; isophthalic acid; terephthalic acid; 1,4 cyclohexane dicarboxylic acid; succinic acid; adipic acid; azelaic acid; sebacic acid; fumaric acid; 2,6-naphthalene dicarboxylic acid; orthophthalic acid; phthalic anhydride; tetrahydrophthalic anhydride; maleic anhydride; succinic anhydride; itaconic anhydride; di-ester materials, such as dimethyl ester derivatives for example dimethyl isophthalate, dimethyl terephthalate, dimethyl 1,4-cyclohexane dicarboxylate, dimethyl 2,6-naphthalene di carboxylate, dimethyl fumarate, dimethyl orthophthalate, dimethylsuccinate, dimethyl glutarate, dimethyl adipate; esters and anhydrides of all the aforementioned acids; and mixtures thereof.

Suitably, the diacid of the second polyester material may comprises isophthalic acid, phthalic acid, maleic anhydride and combinations thereof.

Suitably, the polyol of the second polyester material is an organic polyol.

The second polyester material may be formed from any suitable polyol. Suitable examples of polyols include, but are not limited to the following: alkylene glycols, such as ethylene glycol; propylene glycol; diethylene glycol; dipropylene glycol; triethylene glycol; tripropylene glycol; hexylene glycol; polyethylene glycol; polypropylene glycol and neopentyl glycol; hydrogenated bisphenol A; cyclohexanediol; propanediols including 1,2-propanediol; 1,3-propanediol; butyl ethyl propanediol; 2-methyl-1,3-propanediol; and 2-ethyl-2-butyl-1,3-propanediol; butanediols including 1,4-butanediol; 1,3-butanediol; 2,2,4,4-tetramethyl-1,3-cyclobutanediol; and 2-ethyl-1,4-butanediol; pentanediols including trimethyl pentanediol and 2-methylpentanediol; cyclohexanedimethanol; hexanediols including 1,6-hexanediol; caprolactonediol (for example, the reaction product of epsilon-capro lactone and ethylene glycol); hydroxyalkylated bisphenols; polyether glycols, for example, poly(oxytetramethylene) glycol; trimethylol propane; pentaerythritol; di-pentaerythritol; trimethylol ethane; trimethylol butane; dimethylol cyclohexane; glycerol and the like or combinations thereof.

The second polyester material may be formed from a diol. The second polyester material may be formed from any suitable diol. Suitable examples of diols include, but are not limited to the following: ethylene glycol; 1,2-propane diol; 1,3-propane diol; 1,2-butandiol; 1,3-butandiol; 1,4-butandiol; but-2-ene 1,4-diol; 2,3-butane diol; 2-methyl 1,3-propane diol; 2,2'-dimethyl 1,3-propanediol (neopentyl glycol); 1,5 pentane diol; 3-methyl 1,5-pentanediol; 2,4-diethyl 1,5-pentane diol; 1,6-hexane diol; 2-ethyl 1,3-hexane diol; diethylene glycol; triethylene glycol; dipropylene glycol; tripropylene glycol; 2,2,4-trimethyl pentane 1,3-diol; 1,4 cyclohexane dimethanol; tricyclodecane dimethanol; 2,2,4,4-tetramethyl cyclobutane 1,3-diol; isosorbide; 1,4-cyclohexane diol; 1,1'-isopropylidene-bis (4-cyclohexanol); and mixtures thereof.

Suitably, the diol of the second polyester material may comprise 2-methyl-1,3-propanediol, cyclohexanedimethanol and combinations thereof.

The second polyester material may optionally be formed from additional monomers. The second polyester material may optionally include an additional monomer selected from monoacids or monohydric alcohols or combinations thereof. Suitably, the optional additional monomer of the second polyester material may be organic.

The second polyester material may optionally be formed from additional monoacids. The monoacid of the second polyester is suitably an organic monoacid.

The second polyester material may optionally be formed from any suitable additional monoacid. Suitable examples include, but are not limited to the following: benzoic acid; cyclohexane carboxylic acid; tricyclodecane carboxylic acid; camporic acid; benzoic acid; t-butyl benzoic acid; $C_1$-$C_{18}$ aliphatic carboxylic acids such as acetic acid; propanoic acid; butanoic acid; hexanoic acid; oleic acid; linoleic acid; undecanoic acid; lauric acid; isononanoic acid; fatty acids; hydrogenated fatty acids of naturally occurring oils; esters and/or anhydrides of any of the aforementioned acids and combinations thereof.

The second polyester material may optionally be formed from additional monohydric alcohols. Suitably, the monohydric alcohol of the second polyester material is an organic monohydric alcohol.

The second polyester material may optionally be formed from any suitable additional monohydric alcohol. Suitable examples include but are not limited to the following: benzyl alcohol; hydroxyethoxybenzene; methanol; ethanol; propanol; butanol; pentanol; hexanol; heptanol; dodecyl alcohol; stearyl alcohol; oleyl alcohol; undecanol; cyclohexanol; phenol; phenyl carbinol; methylphenyl carbinol; cresol; monoethers of glycols; halogen-substituted or other substituted alcohols and combinations thereof.

The second polyester material may comprise a phosphatised polyester.

Suitably, the phosphatised polyester comprises the reaction product of a reaction mixture comprising;

  (a) a precursor polyester resin, the precursor polyester resin being a polycondensate of:

    (I) a polyol component comprising a mixture of diols and triols; and
    (II)a polyacid component comprising alpha,beta-unsaturated polycarboxylic acid; and

  (b) a phosphorous acid.

The phosphatised polyester can be prepared by reacting a precursor polyester resin (a) with a phosphorus acid (b). The precursor polyester resin suitably contains both hydroxyl functionality and carboxylic acid functionality.

The precursor polyester resin may have any suitable hydroxyl value (OHV). The precursor polyester resin may have an OHV from 20 to 75 mg KOH/g.

The precursor polyester resin may have any suitable acid number (AN). The precursor polyester resin may have an Mn from 15 to 25 mg KOH/g.

The precursor polyester resin may have any suitable number-average molecular weight (Mn). The precursor polyester resin may have an Mn from 2,000 to 10,000 mg KOH/g.

Suitable precursor polyester resins are typically prepared by condensation (esterification) according to known processes [see, for example, Zeno Wicks, Jr., Frank N. Jones and S. Peter Pappas, Organic Coatings: Science and Technology, Vol. 1, pp. 122-132 (John Wiley & Sons: New York, 1992)]. The precursor polyester resin is suitably derived from a mixture of at least one polyfunctional alcohol (polyol), such as a mixture of diols and triols, esterified with a polyacid or anhydride. The polyacid component comprises an alpha,beta-ethylenically unsaturated polycarboxylic acid or anhydride.

The precursor polyester resins are suitably prepared from a mixture of the alpha,beta-ethylenically unsaturated polycarboxylic acid, suitably with an aromatic and/or aliphatic polycarboxylic acid, and a polyol component comprising a mixture of a diol and triol. The polyol and polycarboxylic acid are combined in desired proportions and chemically reacted using standard esterification (condensation) procedures to provide a precursor polyester resin having both hydroxyl and carboxylic acid groups. A triol is typically used to provide a branched, as opposed to linear, polyester resin.

Examples of suitable polycarboxylic acids or anhydrides for the precursor polyester resin include, but are not limited to, maleic anhydride, maleic acid, fumaric acid, itaconic acid, phthalic acid, phthalic anhydride, isophthalic acid, trimellitic anhydride, terephthalic acid, naphthalene dicarboxylic acid, adipic acid, azelaic acid, succinic acid, sebacic acid and various mixtures thereof.

When used, the aromatic and/or aliphatic polycarboxylic acid of the precursor polyester resin may be used in amounts up to 70 percent by weight, suitably 50 to 65 percent by weight based on total weight of the polycarboxylic acid or anhydride.

Examples of suitable diols, triols and polyols for the precursor polyester resin include, but are not limited to, ethylene glycol, propylene glycol, 1,3-propanediol, glycerol, diethylene glycol, dipropylene glycol, triethylene glycol, trimethylolpropane, trimethylolethane, tripropylene glycol, neopentyl glycol, pentaerythritol, 1,4-butanediol, trimethylol propane, hexylene glycol, cyclohexane dimethanol, and polyethylene or polypropylene glycol.

The polyol component of the precursor polyester resin is a mixture of a diol and a triol. The weight ratio of diol to triol may range from 0.5 to 10 to 1.

The equivalent ratio of polyol component to polycarboxylic acid of the precursor polyester resin may be from 0.9 to 1.1 to 1.0.

The phosphorus acid (b) which is reacted with the precursor polyester resin (a) may be a phosphinic acid, a phosphonic acid or phosphoric acid. Suitably, the phosphorous acid comprises phosphoric acid. As a non-limiting example, the phosphoric acid may be in the form of an aqueous solution, such as orthophosphoric acid, which may be approximately 85.5 vol%, for example. As a further non-limiting example, the phosphoric acid may be 100 vol% phosphoric acid or super phosphoric acid. The phosphoric acid may be a condensation product such as, for example, pyrophosphoric acid, metaphosphoric acid or phosphoric anhydride.

The phosphorus acid may be provided in any suitable amount. The phosphorus acid may be provided in amounts of about 0.2-0.5 equivalents of phosphorus acid per hydroxyl equivalent of the precursor polyester resin, suitably 0.2-0.45 P-OH groups per hydroxyl group.

The reaction of the phosphorus acid (b) with the precursor polyester resin may be conducted in organic solvent. The organic solvent may be an aromatic solvent, a ketone or an ester having a boiling point of 65 to 250°C. Examples of suitable solvents include methyl ethyl ketone, methyl isobutyl ketone, butyl glycol acetate, methoxypropyl acetate and mixtures thereof. The organic solvent for the reaction may be present in any suitable amount. The organic solvent for the reaction may be present in an amount of 20 to 50 percent by weight based on total weight of phosphorus acid, precursor polyester resin and organic solvent.

The reactants, i.e. (a) and (b), and the organic solvent may be mixed at any suitable temperature. The reactants, i.e. (a) and (b), and the organic solvent may be mixed at a temperature from 50 to 95°C. Once the reactants are contacted, the reaction mixture may be maintained at any suitable temperature. Once the reactants are contacted, the reaction mixture may be maintained at a temperature from 90 to 200°C. The reaction may be allowed to proceed for any suitable period. The reaction may be allowed to proceed for a period of 45 minutes to 6 hours.

Advantageously, the use of a phosphatised polyester in the coating compositions of the present invention provides for improved adhesion of the resultant coating to the substrate.

The second polyester material may have any suitable glass transition temperature (Tg).

The second polyester material may have a glass transition temperature (Tg) of up to 40°C.

Thus, according to a third aspect of the present invention there is provided the use of a coating composition in the prevention or reduction of insufficient venting of a beverage can, the beverage can comprising a can body and a can end having a score line on said can end, wherein the coating composition comprises a polyester material having a glass transition temperature (Tg) of at least 55°C and a second polyester material having a glass transition temperature (Tg) of up to 40°C and wherein the coating composition is applied to at least the internal surface of the can end over at least a portion of the score line.

Suitable features of the third aspect of the present invention are as described above in relation to the first and/or second aspects of the present invention. The first polyester material of the second aspect of the present invention is as described above in relation to the first aspect of the present invention.

The second polyester material may have a glass transition temperature (Tg) of up to 30°C.

The second polyester material may have a glass transition temperature (Tg) of up to 20°C.

The second polyester material may have a glass transition temperature (Tg) of up to 10°C.

The second polyester material may have a glass transition temperature (Tg) of up to 0°C.

The second polyester material may have a glass transition temperature (Tg) of at least -200°C.

The second polyester material may have a glass transition temperature (Tg) of at least -100°C.

The second polyester material may have a glass transition temperature (Tg) of at least -50°C.

The second polyester material may have a glass transition temperature (Tg) of at least -10°C.

The second polyester material may have a glass transition temperature from -200°C to 40°C, suitably from -100°C to 40°C, such as from -50°C to 40°C, such as from -20°C to 40°C, or even from -10°C to 40°C. The second polyester material may have a glass transition temperature from -200°C to 30°C, suitably from -100°C to 30°C, such as from -50°C to 30°C, such as from -20°C to 30°C, or even from -10°C to 30°C. The second polyester material may have a glass transition temperature from -200°C to 20°C, suitably from -100°C to 20°C, such as from -50°C to 20°C, such as from -20°C to 20°C, or even from -10°C to 20°C. The second polyester material may have a glass transition temperature from -200°C to 10°C, suitably from -100°C to 10°C, such as from -50°C to 30°C, such as from -20°C to 10°C, or even from -10°C to 10°C. The second polyester material may have a glass transition temperature from -200°C to 0°C, suitably from -100°C to 0°C, such as from -50°C to 0°C, such as from -20°C to 0°C, or even from -10°C to 0°C.

Suitably, the second polyester material may have a glass transition temperature (Tg) of from - 10 to 0°C.

The second polyester material may have any suitable number-average molecular weigh (Mn).

The second polyester material may have an Mn of at least 250 Daltons (Da = g/mole).

The second polyester material may have an Mn of at least 500 Da.

The second polyester material may have an Mn of at least 1,000 Da.

The second polyester material may have an Mn of at least 1,500 Da.

The second polyester material may have an Mn of at least 2,000 Da.

The second polyester material may have an Mn of at least 3,000 Da.

The second polyester material may have an Mn of at least 4,000 Da.

The second polyester material may have an Mn of up to 250,000 Da.

The second polyester material may have an Mn of up to 200,000 Da.

The second polyester material may have an Mn of up to 150,000 Da.

The second polyester material may have an Mn of up to 100,000 Da.

The second polyester material may have an Mn of up to 50,000 Da.

The second polyester material may have an Mn of up to 25,000 Da.

The second polyester material may have an Mn of up to 20,000 Da.

The second polyester material may have an Mn of up to 15,000 Da.

The second polyester material may have an Mn of up to 10,000 Da.

The second polyester material may have an Mn from 250 to 250,000 Da, suitably from 500 to 250,000 Da, such as from 1,000 to 250,000 Da, such as from 1,500 to 250,000 Da, such as from 2,000 to 250,000, such as from 3,000 to 250,000 Da, or even from 2,000 to 250,000 Da. The second polyester material may have an Mn from 250 to 200,000 Da, suitably from 500 to 200,000 Da, such as from 1,000 to 200,000 Da, such as from 1,500 to 200,000 Da, such as from 2,000 to 200,000 Da, such as from 3,000 to 200,000 Da, or even from 4,000 to 200,000 Da. The second polyester material may have an Mn from 250 to 150,000 Da, suitably from 500 to 150,000 Da, such as from 1,000 to 150,000 Da, such as from 1,500 to 150,000 Da, such as from 2,000 to 150,000 Da, such as from 3,000 to 150,000 Da, or even from 4,000 to 150,000 Da. The second polyester material may have an Mn from 250 to 100,000 Da, suitably from 500 to 100,000 Da, such as from 1,000 to 100,000 Da, such as from 1,500 to 100,000 Da, such as from 2,000 to 100,000 Da, such as from 3,000 to 100,000 Da, or even from 4,000 to 100,000 Da. The second polyester material may have an Mn from 250 to 50,000 Da, suitably from 500 to 50,000 Da, such as from 1,000 to 50,000 Da, such as from 1,500 to 50,000 Da, such as from 2,000 to 50,000 Da, such as from 3,000 to 50,000 Da, or even from 4,000 to 50,000 Da. The second polyester material may have an Mn from 250 to 25,000 Da, suitably from 500 to 25,000 Da, such as from 1,000 to 25,000 Da, such as from 1,500 to 25,000 Da, such as from 2,000 to 25,000 Da, such as from 3,000 to 25,000 Da, or even from 4,000 to 25,000 Da. The second polyester material may have an Mn from 250 to 20,000 Da, suitably from 500 to 20,000 Da, such as from 1,000 to 20,000 Da, such as from 1,500 to 20,000 Da, such as from 2,000 to 20,000 Da, such as from 3,000 to 20,000 Da, or even from 4,000 to 20,000 Da. The second polyester material may have an Mn from 250 to 15,000 Da, suitably from 500 to 15,000 Da, such as from 1,000 to 15,000 Da, such as from 1,500 to 15,000 Da, such as from 2,000 to 15,000 Da, such as from 3,000 to 15,000 Da, or even from 4,000 to 15,000 Da. The second polyester material may have an Mn from 250 to 10,000 Da, suitably from 500 to 10,000 Da, such as from 1,000 to 10,000 Da, such as from 1,500 to 10,000 Da, such as from 2,000 to 10,000 Da, such as from 3,000 to 10,000 Da, or even from 4,000 to 10,000 Da.

Suitably, the second polyester material may have an Mn from 2,000 to 10,000 Da.

Suitably, the second polyester may have an Mn from 4,000 to 10,000 Da.

The second polyester material may have any suitable weight-average molecular weigh (Mw).

The second polyester material may have an Mw of at least 250 Daltons (Da = g/mole).

The second polyester material may have an Mw of at least 500 Da.

The second polyester material may have an Mw of at least 1,000 Da.

The second polyester material may have an Mw of at least 1,500 Da.

The second polyester material may have an Mw of at least 2,000 Da.

The second polyester material may have an Mw of at least 3,000 Da.

The second polyester material may have an Mw of at least 4,000 Da.

The second polyester material may have an Mw of up to 1,250,000 Da.

The second polyester material may have an Mw of up to 1,000,000 Da.

The second polyester material may have an Mw of up to 750,000 Da.

The second polyester material may have an Mn of up to 500,000 Da.

The second polyester material may have an Mw of up to 250,000 Da.

The second polyester material may have an Mw of up to 200,000 Da.

The second polyester material may have an Mw of up to 150,000 Da.

The second polyester material may have an Mw of up to 100,000 Da.

The second polyester material may have an Mw of up to 50,000 Da.

The second polyester material may have an Mw of up to 25,000 Da.

The second polyester material may have an Mw of up to 20,000 Da.

The second polyester material may have an Mw of up to 15,000 Da.

The second polyester material may have an Mw of up to 10,000 Da.

The second polyester material may have an Mw from 250 to 1,250,000 Da, suitably from 500 to 1,250,000 Da, such as from 1,000 to 1,250,000 Da, such as from 1,500 to 1,250,000 Da, such as from 2,000 to 1,250,000, such as from 3,000 to 1,250,000 Da, or even from 2,000 to 1,250,000 Da. The second polyester material may have an Mw from 250 to 1,000,000 Da, suitably from 500 to 1,000,000 Da, such as from 1,000 to 1,000,000 Da, such as from 1,500 to 1,000,000 Da, such as from 2,000 to 1,000,000, such as from 3,000 to 1,000,000 Da, or even from 2,000 to 1,000,000 Da. The second polyester material may have an Mw from 250 to 750,000 Da, suitably from 500 to 750,000 Da, such as from 1,000 to 750,000 Da, such as from 1,500 to 750,000 Da, such as from 2,000 to 750,000, such as from 3,000 to 750,000 Da, or even from 2,000 to 750,000 Da. The second polyester material may have an Mw from 250 to 500,000 Da, suitably from 500 to 500,000 Da, such as from 1,000 to 500,000 Da, such as from 1,500 to 500,000 Da, such as from 2,000 to 500,000, such as from 3,000 to 500,000 Da, or even from 2,000 to 500,000 Da. The second polyester material may have an Mw from 250 to 250,000 Da, suitably from 500 to 250,000 Da, such as from 1,000 to 250,000 Da, such as from 1,500 to 250,000 Da, such as from 2,000 to 250,000, such as from 3,000 to 250,000 Da, or even from 2,000 to 250,000 Da. The second polyester material may have an Mw from 250 to 200,000 Da, suitably from 500 to 200,000 Da, such as from 1,000 to 200,000 Da, such as from 1,500 to 200,000 Da, such as from 2,000 to 200,000 Da, such as from 3,000 to 200,000 Da, or even from 4,000 to 200,000 Da. The second polyester material may have an Mw from 250 to 150,000 Da, suitably from 500 to 150,000 Da, such as from 1,000 to 150,000 Da, such as from 1,500 to 150,000 Da, such as from 2,000 to 150,000 Da, such as from 3,000 to 150,000 Da, or even from 4,000 to 150,000 Da. The second polyester material may have an Mw from 250 to 100,000 Da, suitably from 500 to 100,000 Da, such as from 1,000 to 100,000 Da, such as from 1,500 to 100,000 Da, such as from 2,000 to 100,000 Da, such as from 3,000 to 100,000 Da, or even from 4,000 to 100,000 Da. The second polyester material may have an Mw from 250 to 50,000 Da, suitably from 500 to 50,000 Da, such as from 1,000 to 50,000 Da, such as from 1,500 to 50,000 Da, such as from 2,000 to 50,000 Da, such as from 3,000 to 50,000 Da, or even from 4,000 to 50,000 Da. The second polyester material may have an Mw from 250 to 25,000 Da, suitably from 500 to 25,000 Da, such as from 1,000 to 25,000 Da, such as from 1,500 to 25,000 Da, such as from 2,000 to 25,000 Da, such as from 3,000 to 25,000 Da, or even from 4,000 to 25,000 Da. The second polyester material may have an Mw from 250 to 20,000 Da, suitably from 500 to 20,000 Da, such as from 1,000 to 20,000 Da, such as from 1,500 to 20,000 Da, such as from 2,000 to 20,000 Da, such as from 3,000 to 20,000 Da, or even from 4,000 to 20,000 Da. The second polyester material may have an Mw from 250 to 15,000 Da, suitably from 500 to 15,000 Da, such as from 1,000 to 15,000 Da, such as from 1,500 to 15,000 Da, such as from 2,000 to 15,000 Da, such as from 3,000 to 15,000 Da, or even from 4,000 to 15,000 Da. The second polyester material may have an Mw from 250 to 10,000 Da, suitably from 500 to 10,000 Da, such as from 1,000 to 10,000 Da, such as from 1,500 to 10,000 Da, such as from 2,000 to 10,000 Da, such as from 3,000 to 10,000 Da, or even from 4,000 to 10,000 Da.

Suitably, the second polyester material may have an Mw from 2,000 to 10,000 Da.

Suitably, the second polyester may have an Mw from 4,000 to 10,000 Da.

Suitably, the second polyester material may have an Mw substantially equal to the Mn of the second polyester or may have an Mw of up to five (5) times the Mn of the second polyester material, such as up to three (3) times the Mn of the second polyester material.

The second polyester material may have any suitable gross hydroxyl value (OHV).

The second polyester material may have a gross OHV of at least 0 mg KOH/g.

The second polyester material may have an OHV of at least 5 mg KOH/g.

The second polyester material may have an OHV of at least 10 mg KOH/g.

The second polyester material may have an OHV of at least 15 mg KOH/g.

The second polyester material may have an OHV of at least 20 mg KOH/g.

The second polyester material may have an OHV of at least 25 mg KOH/g.

The second polyester material may have an OHV of up to 250 mg KOH/g.

The second polyester material may have an OHV of up to 200 mg KOH/g.

The second polyester material may have an OHV of up to 150 mg KOH/g.

The second polyester material may have an OHV of up to 100 mg KOH/g.

The second polyester material may have an OHV of up to 75 mg KOH/g.

The second polyester material may have an OHV from 0 to 250 mg KOH/g, suitably from 0 to 200 mg KOH/g, such as from 0 to 150 mg KOH/g, such as from 0 to 100 mg KOH/g, or even from 0 to 75 mg KOH/g. The second polyester material may have an OHV from 5 to 250 mg KOH/g, suitably from 5 to 200 mg KOH/g, such as from 5 to 150 mg KOH/g, such as from 5 to 100 mg KOH/g, or even from 5 to 75 mg KOH/g. The second polyester material may have an OHV from 10 to 250 mg KOH/g, suitably from 10 to 200 mg KOH/g, such as from 10 to 150 mg KOH/g, such as from 10 to 100 mg KOH/g, or even from 10 to 75 mg KOH/g. The second polyester material may have an OHV from 15 to 250 mg KOH/g, suitably from 15 to 200 mg KOH/g, such as from 15 to 150 mg KOH/g, such as from 15 to 100 mg KOH/g, or even from 15 to 75 mg KOH/g. The second polyester material may have an OHV from 20 to 250 mg KOH/g, suitably from 20 to 200 mg KOH/g, such as from 20 to 150 mg KOH/g, such as from 20 to 100 mg KOH/g, or even from 20 to 75 mg KOH/g. The second polyester material may have an OHV from 25 to 250 mg KOH/g, suitably from 25 to 200 mg KOH/g, such as from 25 to 150 mg KOH/g, such as from 25 to 100 mg KOH/g, or even from 25 to 75 mg KOH/g.

Suitably, the second polyester may have a gross hydroxyl value (OHV) from 20 to 75 mg KOH/g.

Suitably, the second polyester may have a gross hydroxyl value (OHV) from 40 to 50 mg KOH/g.

Suitably, the gross hydroxyl value (OHV) is expressed on solids.

The second polyester material may have any suitable acid number (AN).

The second polyester material may have an AN of at least 0 mg KOH/g.

The second polyester material may have an AN of at least 5 mg KOH/g.

The second polyester material may have an AN of at least 10 mg KOH/g.

The second polyester material may have an AN of at least 15 mg KOH/g.

The second polyester material may have an AN of up to 150 mg KOH/g.

The second polyester material may have an AN of up to 100 mg KOH/g.

The second polyester material may have an AN of up to 75 mg KOH/g.

The second polyester material may have an AN of up to 50 mg KOH/g

The second polyester material may have an AN of up to 25 mg KOH/g.

The second polyester material may have an AN from 0 to 150 mg KOH/g, suitably from 0 to 100 mg KOH/g, such as from 0 to 75 mg KOH/g, such as from 0 to 50 mg KOH/g, or even from 0 to 25 mg KOH/g. The second polyester material may have an AN from 5 to 150 mg KOH/g, suitably from 5 to 100 mg KOH/g, such as from 5 to 75 mg KOH/g, such as from 5 to 50 mg KOH/g, or even from 5 to 25 mg KOH/g. The second polyester material may have an AN from 10 to 150 mg KOH/g, suitably from 10 to 100 mg KOH/g, such as from 10 to 75 mg KOH/g, such as from 10 to 50 mg KOH/g, or even from 10 to 25 mg KOH/g. The second polyester material may have an AN from 15 to 150 mg KOH/g, suitably from 15 to 100 mg KOH/g, such as from 15 to 75 mg KOH/g, such as from 15 to 50 mg KOH/g, or even from 15 to 25 mg KOH/g.

Suitably, the second polyester material may have an AN from 15 to 25 mg KOH/g.

The coating composition may comprise any suitable amount of second polyester material.

The coating composition may comprise at least 0.5 wt% second polyester material based on the total solid weight of the coating composition.

The coating composition may comprise at least 1 wt% second polyester material based on the total solid weight of the coating composition.

The coating composition may comprise at least 2 wt% second polyester material based on the total solid weight of the coating composition.

The coating composition may comprise at least 3 wt% second polyester material based on the total solid weight of the coating composition.

The coating composition may comprise up to 10 wt% second polyester material based on the total solid weight of the coating composition.

The coating composition may comprise up to 9 wt% second polyester material based on the total solid weight of the coating composition.

The coating composition may comprise up to 8 wt% second polyester material based on the total solid weight of the coating composition.

The coating composition may comprise up to 7 wt% second polyester material based on the total solid weight of the coating composition.

The coating composition may comprise up to 6 wt% second polyester material based on the total solid weight of the coating composition.

The coating composition may comprise up to 5 wt% second polyester material based on the total solid weight of the coating composition.

The coating composition may comprise from 0.5 to 10 wt%, suitably from 1 to 10 wt%, such as from 2 to 10 wt%, or even from 3 to 10 wt% second polyester material based on the total solid weight of the coating composition. The coating composition may comprise from 0.5 to 9 wt%, suitably from 1 to 9 wt%, such as from 2 to 9 wt%, or even from 3 to 9 wt% second polyester material based on the total solid weight of the coating composition. The coating composition may comprise from 0.5 to 8 wt%, suitably from 1 to 8 wt%, such as from 2 to 8 wt%, or even from 3 to 8 wt% second polyester material based on the total solid weight of the coating composition. The coating composition may comprise from 0.5 to 7 wt%, suitably from 1 to 7 wt%, such as from 2 to 7 wt%, or even from 3 to 7 wt% second polyester material based on the total solid weight of the coating composition. The coating composition may comprise from 0.5 to 6 wt%, suitably from 1 to 6 wt%, such as from 2 to 6 wt%, or even from 3 to 6 wt%, second polyester material based on the total solid weight of the coating composition. The coating composition may comprise from 0.5 to 5 wt%, suitably from 1 to 5 wt%, such as from 2 to 5 wt%, or even from 3 to 5 wt% second polyester material based on the total solid weight of the coating composition.

Suitably, the coating composition may comprise 3 to 5 wt% second polyester material based on the total solid weight of the coating composition.

The first polyester material and second polyester material may be present in the coating composition any suitable weight ratio.

The weight ratio of the first polyester material to the second polyester material may be up to 99:1.

The weight ratio of the first polyester material to the second polyester material may be up to 97:3.

The weight ratio of the first polyester material to the second polyester material may be up to 95:5.

The weight ratio of the first polyester material to the second polyester material may at least 60:40.

The weight ratio of the first polyester material to the second polyester material may at least 70:30.

The weight ratio of the first polyester material to the second polyester material may be at least 80:20.

The weight ratio of the first polyester material to the second polyester material may be at least 90:10.

The weight ratio of the first polyester material to the second polyester material may be 99:1 to 60:40, suitably 99:1 to 70:30, such as 99:1 to 80:20, or even 99:1 to 90:10. The weight ratio of the first polyester material to the second polyester material may be 97:3 to 60:40, suitably 97:3 to 70:30, such as 97:3 to 80:20, or even 97:3 to 90:10. The weight ratio of the first polyester material to the second polyester material may be 95:5 to 60:40, suitably 95:5 to 70:30, such as 95:5 to 80:20, or even 95:5 to 90:10.

Suitably, the weight ratio of the first polyester material to the second polyester material may be 99:1 to 60:40.

Suitably, weight ratio of the first polyester material to the second polyester material may be 99:1 to 95:5.

Suitably, weight ratio of the first polyester material to the second polyester material may be 95:5.

The coating compositions may comprise a crosslinking material.

The coating composition may comprise any suitable crosslinking material. Suitable crosslinking materials will be well known to the person skilled in the art. Suitable crosslinking materials include, but are not limited to one or more of the following: phenolic resins (or phenol-formaldehyde resins); aminoplast resins (or triazine-formaldehyde resins); amino resins; epoxy resins; isocyanate resins; beta-hydroxy (alkyl) amide resins; alkylated carbamate resins; polyacids; anhydrides; organometallic acid-functional materials; polyamines; polyamides and combinations thereof.

Suitable examples of phenolic resins are those formed from the reaction of a phenol with an aldehyde or a ketone, suitably from the reaction of a phenol with an aldehyde, such as from the reaction of a phenol with formaldehyde or acetaldehyde, or even from the reaction of a phenol with formaldehyde. Non-limiting examples of phenols which may be used to form phenolic resins are phenol, butyl phenol, xylenol and cresol. General preparation of phenolic resins is described in "The Chemistry and Application of Phenolic Resins or Phenoplasts", Vol V, Part I, edited by Dr Oldring; John Wiley and Sons/Cita Technology Limited, London, 1997. Suitably, the phenolic resins are of the resol type. By "resol type" we mean resins formed in the presence of a basic (alkaline) catalyst and optionally an excess of formaldehyde. Suitable examples of commercially available phenolic resins include, but are not limited to those sold under the trade name PHENODUR (RTM) commercially available from Cytec Industries, such as PHENODUR EK-827, PHENODUR VPR1785, PHENODUR PR 515, PHENODUR PR516, PHENODUR PR 517, PHENODUR PR 285, PHENODUR PR612 or PHENODUR PH2024; resins sold under the trade name BAKELITE (RTM) commercially available from Momentive, such as BAKELITE 6582 LB, BAKELITE 6535, BAKELITE PF9989 or BAKELITE PF6581; SFC 112 commercially available from Schenectady; DUREZ (RTM) 33356 commercially available from SHHPP; ARALINK (RTM) 40-852 commercially available from Bitrez; or combinations thereof.

The coating compositions may be substantially phenol free, or essentially phenol free, or completely phenol free. By "substantially free" we mean to refer to coating compositions containing less than 1000 parts per million (ppm) of any of the compounds or derivatives thereof mentioned above. By "essentially free" we mean to refer to coating compositions containing less than 100 ppm of any of the compounds or derivatives thereof mentioned above. By "completely free" we mean to refer to coating compositions containing less than 20 parts per billion (ppb) of any of the compounds or derivatives thereof.

Suitable examples of isocyanate resins include, but are not limited to the following: isophorone diisocyanate (IPDI), such as those sold under the trade name DESMODUR (RTM) commercially available from Bayer, for example DESMODUR VP-LS 2078/2 or DESMODUR PL 340 or those sold under the trade name VESTANAT (RTM) commercially available from Evonik, for example VESTANANT B 1370, VESTANAT B 118 6A or VESTANAT B 1358 A; blocked aliphatic polyisocyanate based on hexamethylene diisocyanate (HDI), such as those sold under the trade name DESMODUR (RTM) commercially available from Bayer, for example DESMODUR BL3370 or DESMODUR BL 3175 SN, those sold under the trade name DURANATE (RTM) commercially available from Asahi KASEI, for example DURANATE MF-K60X, those sold under the trade name TOLONATE (RTM) commercially available from Perstorp, for example TOLONATE D2 or those sold under the trade name TRIXENE (RTM) commercially available from Baxenden, for example TRIXENE-BI-7984 or TRIXENE 7981; or combinations thereof.

Suitable examples of aminoplast resins include those which are formed by reacting a triazine such as melamine or benzoguanamine with formaldehyde. Suitably, these condensates may be etherified, typically, with methanol, ethanol, butanol or mixtures thereof. For the chemistry, preparation and use of aminoplast resins, see "The Chemistry and Applications of Amino Crosslinking agents or Aminoplast", Vol. V, Part 11, page 21 ff., edited by Dr. Oldring; John Wiley & Sons/Cita Technology Limited, London, 1998. Suitable examples of commercially available aminoplast resins include, but are not limited to, those sold under the trade name MAPRENAL (registered trade mark), such as MAPRENAL MF980 (commercially available from Ineos); those sold under the trade name CYMEL (registered trade mark), such as CYMEL 303 and CYMEL 1128 (available from Cytec Industries); and combinations thereof.

The crosslinking material may be present in the coating composition in any suitable amount.

The coating compositions may comprise at least 1 wt% crosslinking material based on the total solid weight of the coating composition.

The coating compositions may comprise at least 5 wt% crosslinking material based on the total solid weight of the coating composition.

The coating compositions may comprise at least 10 wt% crosslinking material based on the total solid weight of the coating composition.

The coating compositions may comprise at least 15wt% crosslinking material based on the total solid weight of the coating composition.

The coating compositions may comprise at least 20 wt% crosslinking material based on the total solid weight of the coating composition.

The coating compositions may comprise up to 90 wt% crosslinking material based on the total solid weight of the coating composition.

The coating compositions may comprise up to 80 wt% crosslinking material based on the total solid weight of the coating composition.

The coating compositions may comprise up to 70 wt% crosslinking material based on the total solid weight of the coating composition.

The coating compositions may comprise up to 60 wt% crosslinking material based on the total solid weight of the coating composition.

The coating compositions may comprise up to 50 wt% crosslinking material based on the total solid weight of the coating composition.

The coating compositions may comprise up to 40 wt% crosslinking material based on the total solid weight of the coating composition.

The coating compositions may comprise up to 30 wt% crosslinking material based on the total solid weight of the coating composition.

The coating compositions may comprise up to 25 wt% crosslinking material based on the total solid weight of the coating composition.

The coating composition may comprise from 1 to 90 wt%, suitably from 1 to 80 wt%, such as from 1 to 70 wt%, such as from 1 to 60 wt%, such as from 1 to 50 wt%, such as from 1 to 40 wt%, such as from 1 to 30 wt%, or even from 1 to 25 wt% crosslinking material based on the total solid weight of the coating composition. The coating composition may comprise from 5 to 90 wt%, suitably from 5 to 80 wt%, such as from 5 to 70 wt%, such as from 5 to 60 wt%, such as from 5 to 50 wt%, such as from 5 to 40 wt%, such as from 5 to 30 wt%, or even from 5 to 25 wt% crosslinking material based on the total solid weight of the coating composition. The coating composition may comprise from 10 to 90 wt%, suitably from 10 to 80 wt%, such as from 10 to 70 wt%, such as from 10 to 60 wt%, such as from 10 to 50 wt%, such as from 10 to 40 wt%, such as from 10 to 30 wt%, or even from 10 to 25 wt% crosslinking material based on the total solid weight of the coating composition. The coating composition may comprise from 15 to 90 wt%, suitably from 15 to 80 wt%, such as from 15 to 70 wt%, such as from 15 to 60 wt%, such as from 15 to 50 wt%, such as from 15 to 40 wt%, such as from 15 to 30 wt%, or even from 15 to 25 wt% crosslinking material based on the total solid weight of the coating composition. The coating composition may comprise from 20 to 90 wt%, suitably from 20 to 80 wt%, such as from 20 to 70 wt%, such as from 20 to 60 wt%, such as from 20 to 50 wt%, such as from 20 to 40 wt%, such as from 20 to 30 wt%, or even from 20 to 25 wt% crosslinking material based on the total solid weight of the coating composition.

Suitably, the coating composition may comprise from 15 to 25 wt% crosslinking material based on the total solid weight of the coating composition.

Suitably, the crosslinking material may comprise an aminoplast resin.

Suitably, the crosslinking material may comprise those which are formed by reacting a triazine, such as melamine or benzoguanamine, with formaldehyde.

Suitably, the crosslinking material may comprise benzoguanamine or a derivative thereof.

The benzoguanamine or derivative thereof may comprise commercially available benzoguanamine or derivative thereof. Suitable examples of commercially available benzoguanamine and its derivatives include, but are not limited to benzoguanamine-formaldehyde based materials such as those sold under the trade name CYMEL (registered trade mark), for example CYMEL 1123 (commercially available from Cytec Industries), thos sold under the trade name ITAMIN (registered trade mark), for example ITAMIN BG143 (commercially available from Galstaff Multiresine) or those sold under the trade name MAPRENAL (registered trade mark), for example, MAPRENAL BF892 and MAPRENAL BF 892/68B (commercially available from Ineos); glycoluril based materials, such as those sold under the trade name CYMEL (registered trade mark), for example, CYMEL 1170 and CYMEL 1172 (commercially available from Cytec); and combinations thereof.

Suitably, the benzoguanamine or derivative thereof may comprise benzoguanamine-formaldehyde based materials sold under the trade name MAPRENAL (registered trade mark).

Suitably, the benzoguanamine or derivative thereof may comprise MAPRENAL BF892 and/or MAPRENAL BF 892/68B (commercially available from Ineos). Suitably, benzoguanamine or derivative thereof may comprise MAPRENAL BF 892/68B (commercially available from Ineos).

The benzoguanamine or derivative thereof may be present in the coating composition in any suitable amount.

The coating compositions may comprise at least 1 wt% benzoguanamine or derivative thereof based on the total solid weight of the coating composition.

The coating compositions may comprise at least 5 wt% benzoguanamine or derivative thereof based on the total solid weight of the coating composition.

The coating compositions may comprise at least 10 wt% benzoguanamine or derivative thereof based on the total solid weight of the coating composition.

The coating compositions may comprise at least 15wt% benzoguanamine or derivative thereof based on the total solid weight of the coating composition.

The coating compositions may comprise at least 20 wt% benzoguanamine or derivative thereof based on the total solid weight of the coating composition.

The coating compositions may comprise up to 90 wt% benzoguanamine or derivative thereof based on the total solid weight of the coating composition.

The coating compositions may comprise up to 80 wt% benzoguanamine or derivative thereof based on the total solid weight of the coating composition.

The coating compositions may comprise up to 70 wt% benzoguanamine or derivative thereof based on the total solid weight of the coating composition.

The coating compositions may comprise up to 60 wt% benzoguanamine or derivative thereof based on the total solid weight of the coating composition.

The coating compositions may comprise up to 50 wt% benzoguanamine or derivative thereof based on the total solid weight of the coating composition.

The coating compositions may comprise up to 40 wt% benzoguanamine or derivative thereof based on the total solid weight of the coating composition.

The coating compositions may comprise up to 30 wt% benzoguanamine or derivative thereof based on the total solid weight of the coating composition.

The coating compositions may comprise up to 25 wt% benzoguanamine or derivative thereof based on the total solid weight of the coating composition.

The coating composition may comprise from 1 to 90 wt%, suitably from 1 to 80 wt%, such as from 1 to 70 wt%, such as from 1 to 60 wt%, such as from 1 to 50 wt%, such as from 1 to 40 wt%, such as from 1 to 30 wt%, or even from 1 to 25 wt% benzoguanamine or derivative thereof based on the total solid weight of the coating composition. The coating composition may comprise from 5 to 90 wt%, suitably from 5 to 80 wt%, such as from 5 to 70 wt%, such as from 5 to 60 wt%, such as from 5 to 50 wt%, such as from 5 to 40 wt%, such as from 5 to 30 wt%, or even from 5 to 25 wt% benzoguanamine or derivative thereof based on the total solid weight of the coating composition. The coating composition may comprise from 10 to 90 wt%, suitably from 10 to 80 wt%, such as from 10 to 70 wt%, such as from 10 to 60 wt%, such as from 10 to 50 wt%, such as from 10 to 40 wt%, such as from 10 to 30 wt%, or even from 10 to 25 wt% benzoguanamine or derivative thereof based on the total solid weight of the coating composition. The coating composition may comprise from 15 to 90 wt%, suitably from 15 to 80 wt%, such as from 15 to 70 wt%, such as from 15 to 60 wt%, such as from 15 to 50 wt%, such as from 15 to 40 wt%, such as from 15 to 30 wt%, or even from 15 to 25 wt% benzoguanamine or derivative thereof based on the total solid weight of the coating composition. The coating composition may comprise from 20 to 90 wt%, suitably from 20 to 80 wt%, such as from 20 to 70 wt%, such as from 20 to 60 wt%, such as from 20 to 50 wt%, such as from 20 to 40 wt%, such as from 20 to 30 wt%, or even from 20 to 25 wt% benzoguanamine or derivative thereof based on the total solid weight of the coating composition.

Suitably, the coating composition may comprise from 15 to 25 wt% benzoguanamine or derivative thereof based on the total solid weight of the coating composition.

The coating compositions may further comprise a solvent. The coating compositions may comprise a single solvent or a mixture of solvents. The solvent may comprise water, an organic solvent, a mixture of water and an organic solvent or a mixture of organic solvents.

The organic solvent suitably has sufficient volatility to essentially entirely evaporate from the coating composition during the curing process. As a non-limiting example, the curing process may be by heating at 130-230 °C for 1-15 minutes.

Suitable organic solvents include, but are not limited to the following: aliphatic hydrocarbons such as mineral spirits and high flash point naphtha; aromatic hydrocarbons such as benzene; toluene; xylene; solvent naphtha 100, 150, 200; those available from Exxon-Mobil Chemical Company under the SOLVESSO (RTM) trade name; alcohols such as ethanol; n-propanol; isopropanol; and n-butanol; ketones such as acetone; cyclohexanone; methylisobutyl ketone; methyl ethyl ketone; esters such as ethyl acetate; butyl acetate; n-hexyl acetate; RHODIASOLV (RTM) RPDE (a blend of succinic and adipic esters commercially available from Rhodia); glycols such as butyl glycol; glycol ethers such as methoxypropanol; ethylene glycol monomethyl ether; ethylene glycol monobutyl ether and combinations thereof. The solvent, when present, may suitably be used in the coating composition in amounts from 5 to 90 wt%, suitably from 10 to 80 wt%, such as from 20 to 75 wt%, or even from 30 to 70 wt% based on the total weight of the coating composition. Suitably, the solvent, when present, may be used in the coating composition in amounts from 50 to 70 wt% based on the total weight of the coating composition.

The polyester materials of the present invention may be dissolved or dispersed in the said solvent during and/or after their formation.

The coating compositions may further comprise a catalyst. Any catalyst typically used to catalyse crosslinking reactions between polyester materials and crosslinking agents may be used. Suitable catalysts will be well known to the person skilled in the art. The catalyst may be a non-metal or a metal catalyst or a combination thereof. Suitable non-metal catalysts include, but are not limited to the following: phosphoric acid; blocked phosphoric acid; CYCAT (RTM) XK 406 N (commercially available from Allnex); sulfuric acid; sulfonic acid; CYCAT 600 (commercially available from Allnex); NACURE (RTM) 5076 or NACURE 5925 (commercially available from King industries); acid phosphate catalyst such as NACURE XC 235 (commercially available from King Industries); and combinations thereof. Suitable metal catalysts will be well known to the person skilled in the art. Suitable metal catalysts include, but are not limited to the following: tin containing catalysts, such as monobutyl tin tris (2-ethylhexanoate); zirconium containing catalysts, such as KKAT (RTM) 4205 (commercially available from King Industries); titanate based catalysts, such as tetrabutyl titanate TnBT (commercially available from Sigma Aldrich); and combinations thereof. The catalyst, when present, may be used in the coating composition in any suitable amount. The catalyst, when present, may be used in amounts from 0.001 to 10 wt%, suitably from 0.001 to 5 wt%, such as from 0.01 to 5 wt%, or even from 1 to 3 wt% based on the total solid weight of the coating composition. Suitably, the catalyst, when present, may be used in amounts from 0.01 to 1.5 wt% based on the total solid weight of the coating composition.

The coating compositions may comprise a further resin material. Suitable further resin materials will be well known to a person skilled in the art. Suitable examples of further resin materials include, but are not limited to the following: polyester resins; acrylic resins; polyvinyl chloride (PVC) resins; alkyd resins; polyurethane resins; polysiloxane resins; epoxy resins or combinations thereof.

The coating compositions may comprise other optional materials well known in the art of formulating coatings, such as colorants, plasticizers, abrasion-resistant particles, anti-oxidants, hindered amine light stabilizers, UV light absorbers and stabilizers, surfactants, flow control agents, thixotropic agents, fillers, organic co-solvents, reactive diluents, catalysts, grind vehicles, lubricants, waxes and other customary auxiliaries.

As used herein, the term "colorant" means any substance that imparts colour and/or other opacity and/or other visual effect to the composition. The colorant can be added to the coating composition in any suitable form, such as discrete particles, dispersions, solutions and/or flakes. A single colorant or a mixture of two or more colorants can be used in the coatings of the present invention. Suitable colorants are listed in U.S. Patent No. 8,614,286, column 7, line 2 through column 8, line 65, which is incorporated by reference herein. Particularly suitable for packaging coatings are those approved for food contact, such as titanium dioxide; iron oxides, such as black iron oxide; aluminium paste; aluminium powder such as aluminium flake; carbon black; ultramarine blue; phthalocyanines, such as phthalocyanine blue and phthalocyanine green; chromium oxides, such as chromium green oxide; graphite fibrils; ferried yellow; quindo red; and combinations thereof, and those listed in Article 178.3297 of the Code of Federal Regulations, which is incorporated by reference herein. The colorant, when present, may be used in the coating composition in any suitable amount. The colorant, when present, may be used in the coating composition in amounts up to 90 wt%, such as up to 50 wt%, or even up to 10 wt% based on the total solid weight of the coating composition.

Suitable lubricants will be well known to the person skilled in the art. Suitable examples of lubricants include, but are not limited to the following: carnauba wax and polyethylene type lubricants. The lubricant, when present, may be used in the coating composition in amounts of at least 0.01 wt% based on the total solid weight of the coating composition.

Surfactants may optionally be added to the coating composition in order to aid in flow and wetting of the substrate. Suitable surfactants will be well known to the person skilled in the art. Suitably the surfactant, when present, is chosen to be compatible with food and/or beverage container applications. Suitable surfactants include, but are not limited to the following: alkyl sulphates (e.g., sodium lauryl sulphate); ether sulphates; phosphate esters; sulphonates; and their various alkali, ammonium, amine salts; aliphatic alcohol ethoxylates; alkyl phenol ethoxylates (e.g. nonyl phenol polyether); salts and/or combinations thereof. The surfactants, when present, may be present in amounts from 0.01 wt% to 10 wt%, suitably from 0.01 to 5 wt%, such as from 0.01 to 2 wt% based on the total solid weight of the coating composition.

The coating compositions may be substantially free, may be essentially free or may be completely free of bisphenol A (BPA) and derivatives thereof. Derivatives of bisphenol A include, for example, bisphenol A diglycidyl ether (BADGE). The coating compositions may be substantially free or completely free of bisphenol F (BPF) and derivatives thereof. Derivatives of bisphenol F include, for example, bisphenol F diglycidyl ether (BPFG). The compounds or derivatives thereof mentioned above may not be added to the coating composition intentionally but may be present in trace amounts because of unavoidable contamination from the environment. By "substantially free" we mean to refer to coating compositions containing less than about 1000 parts per million (ppm) of any of the compounds or derivatives thereof mentioned above. By "essentially free" we mean to refer to coating compositions containing less than about 100 ppm of any of the compounds or derivatives thereof mentioned above. By "completely free" we mean to refer to coating compositions containing less than about 20 parts per billion (ppb) of any of the compounds or derivatives thereof.

The coating compositions may be substantially free, may be essentially free or may be completely free of dialkyltin compounds, including oxides or other derivatives thereof. Examples of dialkyltin compounds include, but are not limited to the following: dibutyltindilaurate (DBTDL); dioctyltindilaurate; dimethyltin oxide; diethyltin oxide; dipropyltin oxide; dibutyltin oxide (DBTO); dioctyltinoxide (DOTO) or combinations thereof. By "substantially free" we mean to refer to coating compositions containing less than 1000 parts per million (ppm) of any of the compounds or derivatives thereof mentioned above. By "essentially free" we mean to refer to coating compositions containing less than 100 ppm of any of the compounds or derivatives thereof mentioned above. By "completely free" we mean to refer to coating compositions containing less than 20 parts per billion (ppb) of any of the compounds or derivatives thereof.

The coating composition of the present invention may be cured by any suitable method. The coating composition may be cured by heat curing or by chemical curing, suitably by heat curing. The coating composition, when heat cured, may be cured at any suitable temperature. The coating composition, when heat cured, may be cured at temperatures from 50 to 350°C, suitably from 100 to 320°C, such as from 150 to 300°C, or even from 200 to 300°C. Suitably, the coating composition, when heat cured, may be cured at 230°C or at 250°C. Suitably, the coating composition, when heat cured, may be cured to a peak metal temperature (PMT) of 230°C to 250°C. For the avoidance of doubt, the term "peak metal temperature", and like terms as used herein, is meant unless specified otherwise the maximum temperature reached by the metal substrate during exposure to a heat during the heat curing process. In other words, the peak metal temperature (PMT) is the maximum temperature reached by the metal substrate and not the temperature which is applied thereto. It will be appreciated by a person skilled in the art that the temperature reached by the metal substrate may be lower than the temperature which is applied thereto or may be substantially equal to the temperature which is applied thereto. Suitably, the temperature reached by the metal substrate may be lower that the temperature which is applied thereto.

Curing the coating compositions of the present invention suitably forms a cured film. The cured film may have any suitable glass transition temperature (Tg).

The cured film may have a glass transition temperature (Tg) of at least 40°C.

The cured film may have a glass transition temperature (Tg) of at least 45°C

The cured film may have a glass transition temperature (Tg) of at least 50°C.

The cured film may have a glass transition temperature (Tg) of at least 52°C.

The cured film may have a glass transition temperature (Tg) of up to 150°C.

The cured film may have a glass transition temperature (Tg) of up to 120°C.

The cured film may have a glass transition temperature (Tg) of up to 100°C.

The cured film may have a glass transition temperature (Tg) of up to 90°C.

The cured film may have a glass transition temperature from 40 to 150°C, suitably from 40 to 120°C, such as from 40 to 100°C, or even from 40 to 90°C. The cured film may have a glass transition temperature from 45 to 150°C, suitably from 45 to 120°C, such as from 45 to 100°C, or even from 45 to 90°C. The cured film may have a glass transition temperature from 50 to 150°C, suitably from 50 to 120°C, such as from 50 to 100°C, or even from 50 to 90°C. The cured film may have a glass transition temperature from 52 to 150°C, suitably from 52 to 120°C, such as from 52 to 100°C, or even from 52 to 90°C.

The coating compositions are for use in the reduction or prevention of insufficient venting of a beverage can. The beverage can comprises a can body and a can end. Examples of beverage cans include, but are not limited to one or more of the following, two-piece cans, three-piece cans and the like.

The beverage can may be formed from any suitable material. Suitably, the beverage can may be formed from metal. Suitable metals will be well known to a person skilled in the art. Suitable examples include, but are not limited to the following: steel; tinplate; tinplate pretreated with a protective material such as chromium, titanium, titanate or aluminium; tin-free steel (TFS); galvanised steel, such as for example electro-galvanised steel; aluminium; aluminium alloy; and combinations thereof. It will be appreciated by a person skilled in the art that the can body and can end of the beverage can may be formed from the same or different materials, such as the same or different metals. Suitably, the can body and can end of the beverage can may be formed from the same material, such as the same metal.

The can body and/or can end may be made from coiled metal stock. Suitably, at least the can end may be formed from coiled metal stock. Suitably, the coating compositions of the present invention may be applied to coiled metal stock, such as the coiled metal stock from which the ends of cans are made ("can end stock").

The coating compositions may be applied to the can end at any suitable time. The coating composition may be applied to the can end stock prior to the can end being cut and stamped out of the coiled metal stock, may be applied to the can end after the can end has been formed from the can end stock or may be applied to the can end once it has been attached to the can body to form a beverage can. Suitably, the coating compositions may be applied to the can end stock prior to the can end being cut and stamped out of the coiled metal stock. The can end may be coated on one or both surfaces. As such, the can coil stock may be coated on one or both surfaces prior to the can end being cut and stamped out of the coiled metal stock. Suitably, the can end may be coated on at least one surface thereof. Suitably, the can end may be coated on both surfaces thereof. Suitably, the coiled metal stock may be coated on at least one surface thereof prior to the can end being cut and stamped out of the coiled metal stock. Suitably, the coiled metal stock may be coated on both surfaces thereof prior to the can end being cut and stamped out of the coiled metal stock. Thus, the coiled metal stock may be coated on both surfaces thereof and thereafter the coated metal stock may be punched to form said can ends.

Advantageously, coating the coiled metal stock on both surfaces thereof provides sufficient lubricity such that the coating is able to survive the stamping operation.

The can ends of the present invention have a score line thereon. "Score line", and like terms as used herein, means a line which is partially cut into the can end, such that the line does not extend all the way through the can end, and which defines a portion of the can end to be opened. The score line suitably facilitates shearing around the periphery of the portion of the can end to be opened upon the application of a pushing and/or pulling force to the portion of the can end to be opened. Suitably, the score line is of a sufficient depth and width such that it facilitates shearing around the periphery of the portion of the can end to be opened upon the application of a pushing and/or pulling force to the portion of the can end to be opened. Such score lines will be well known to a person skilled in the art. The portion of the can end to be opened may comprise substantially all of the area of the can end or a portion of the area of the can end. The can ends having a score line thereon may be any suitable can end. The can ends having a score line thereon may be those having a "pop-top" opening and/or may be an "easy open" can end. For example, the can end may be scored so as to form a "pop-top" opening and a pop-top ring may then be attached with a pin that is separately fabricated. For can ends having a pop-top opening, a score line is suitably formed substantially around a portion of the can end, such as a depressed portion of the can end, which, when opened, defines an aperture through which the beverage can contents may be poured. For example, the can end may be scored so as to form an "easy open" can end. For easy open can ends, a score line is suitably formed substantially around the perimeter of the can end allowing for easy opening or removing of the can end from the beverage can, typically by means of a pull tab.

Suitably, the portion of the can end to be opened may comprise a portion of the can end.

Suitably, the can end may comprise a pop-top opening.

Suitably, the score line is applied to the can ends after the can ends have punched from the coated metal stock.

The can ends, once formed, are suitably attached to a can body. The can end may be attached to the can body by any suitable method. Suitably, the can end may be attached to the can body by an edge rolling process.

The coating compositions are applied to at least a portion of the internal surface of the can end over at least a portion of the score line. The coating compositions may be applied to at least the internal surface of the can end over a portion of the score line or may be applied over all of the score line. Suitably, coating composition may be applied to at least the internal surface of the can end over all of the score line. It will be appreciated that the invention is not limited to the coating compositions being applied only to the internal surface of the can end over at least a portion of the score line. For the avoidance of doubt, by the term "over the score line", or like terms as used herein, is meant unless specified otherwise that the coating composition covers at least a portion of the score line. For example, the coating compositions should cover at least the part of the can end which is defined by the score line. Suitably, the coating compositions may cover at least a portion of the score line of the can end and extend one or both sides thereof. Suitably, the coating compositions may cover at least the part of the can which is mechanically sheared upon opening of the beverage can.

The coating compositions may be applied to substantially all of or to a portion of the interior surface of the can end, with the proviso that the coating compositions are applied to at least a portion of the interior surface of the can end over at least a portion of the score line. Suitably, the coating compositions may be applied to substantially all of the interior surface of the can end. The coating compositions may be applied to at least a portion of the exterior surface of the can end. The coating compositions may be applied to substantially all of or to a portion of the exterior surface of the can end. Suitably, the coating compositions may be applied the exterior surface of the can end over at least a portion of the score line. The coating compositions may be applied to at least a portion of the interior and/or exterior surface of the can body.

The coating compositions may be applied to the beverage can by any suitable method. Methods of applying said coating compositions will be well known to a person skilled in the art. Suitable application methods include, but are not limited to one or more of the following, spray coating, roll coating, dipping and/or electrocoating. It will be appreciated by a person skilled in the art that for two-piece beverage cans, the coating compositions may typically be applied by spray coating after the can is made. It will also be appreciated by the person skilled in the art that for three-piece cans, a flat sheet may typically be roll coated with one or more of the coating compositions first and then the can may be formed. However, the application of the coating compositions is not limited to these methods. It will be appreciated by a person skilled in the art that the can body and can end of the beverage can may be coated with the coating composition by the same or a different method.

The coating compositions may be applied to any suitable dry film thickness. In certain embodiments the coating compositions may be applied to a dry film thickness from about 0.1μm (microns) to 12μm, suitably from about 2μm to 8μm, more suitably from about 4μm to 7μm, or even from about 4μm to 6μm.

The coating compositions may be applied to the beverage can as a single layer or as part of a multi layer system. The coating composition may be applied as a single layer. The coating composition may be applied as the first coat of a multi coat system. The coating composition may be applied as an undercoat or a primer. The second, third, fourth etc. coats may comprise any suitable paint such as those containing, for example, epoxy resins; polyester resins; polyurethane resins; polysiloxane resins; hydrocarbon resins or combinations thereof. The coating compositions may be applied on top of another paint layer as part of a multi layer system. For example, the coating composition may be applied on top of a primer. The coating compositions may form an intermediate layer or a top coat layer. The coating composition may be applied to a substrate once or multiple times. It will be appreciated by a person skilled in the art that the can body and can end of the beverage can may each independently be coated with a single layer or a multi layer system.

According to a fourth aspect of the present invention there is provided the use of a coating composition in the reduction or prevention of insufficient venting of a beverage can, the beverage can comprising a can body and a can end having a score line on said can end, wherein the coating composition comprises a polyester material having a glass transition temperature (Tg) of at least 55°C and a second polyester material having a glass transition temperature (Tg) of up to 40°C, wherein the weight ratio of the first polyester material to the second polyester material is 99:1 to 60:40 and wherein the coating composition is applied to at least the internal surface of the can end over at least a portion of the score line.

According to a fifth aspect of the present invention there is provided a method of reducing or preventing insufficient venting of a beverage can, the method comprising the steps of:

(a) forming a can body and a can end having a score line on said can end;
(b) applying a coating composition on at least an internal surface of the can end over at least a portion of the score line; and
(c) attaching the can body to the can end,

wherein the coating composition comprises a polyester material having a glass transition temperature (Tg) of at least 55°C.

According to a sixth aspect of the present invention there is provided a method of reducing or preventing insufficient venting of a beverage can, the method comprising the steps of:

(a) forming a can body and a can end having a score line on said can end;
(b) applying a coating composition on at least an internal surface of the can end over at least a portion of the score line; and
(c) attaching the can body to the can end,

wherein the coating composition comprises a polyester material having a glass transition temperature (Tg) of at least 55°C and a second polyester material.

According to a seventh aspect of the present invention there is provided a method of reducing or preventing insufficient venting of a beverage can, the method comprising the steps of:

(a) forming a can body and a can end having a score line on said can end;

(b) applying a coating composition on at least an internal surface of the can end over at least a portion of the score line; and

(c) attaching the can body to the can end,

wherein the coating composition comprises a polyester material having a glass transition temperature (Tg) of at least 55°C and a second polyester material having a glass transition temperature (Tg) of up to 40°C.

According to a eighth aspect of the present invention there is provided a method of reducing or preventing insufficient venting of a beverage can, the method comprising the steps of:

(a) forming a can body and a can end having a score line on said can end;

(b) applying a coating composition on at least an internal surface of the can end over at least a portion of the score line; and

(c) attaching the can body to the can end,

wherein the coating composition comprises a polyester material having a glass transition temperature (Tg) of at least 55°C and a second polyester material having a glass transition temperature (Tg) of up to 40°C, wherein the weight ratio of the first polyester to the second polyester is 99:1 to 60:40.

Suitable features of the fourth, fifth, sixth, seventh and eighth aspects of the present invention are as described above in relation to the first aspect, second and/or third aspects of the present invention.

The steps of the method according to any of the fifth, sixth and seventh aspects of the present invention may be carried out in any suitable order. For example, the coating composition may be applied to the can end before or after the can end has been formed. For example, the coating composition may be applied to the can end before or after a score line is formed on the can end. For example, the coating composition may be applied to the can end before or after attaching the can body to the can end.

The can body may be attached to the can end by any suitable method. Suitably, the can body may be attached to the can end by an edge rolling process.

According to a ninth aspect of the present invention there is provided a method of reducing or preventing insufficient venting of a beverage can, the beverage can comprising a can body and a can end having a score line on said can end, the method comprising the steps of:

(a) applying a coating composition on at least an internal surface of the can end over at least a portion of the score line,

wherein the coating composition comprises a polyester material having a glass transition temperature (Tg) of at least 55°C.

According to a tenth aspect of the present invention there is provided a method of reducing or preventing insufficient venting of a beverage can, the beverage can comprising a can body and a can end having a score line on said can end, the method comprising the steps of:

(a) applying a coating composition on at least an internal surface of the can end over at least a portion of the score line,

wherein the coating composition comprises a polyester material having a glass transition temperature (Tg) of at least 55°C and a second polyester material.

According to a eleventh aspect of the present invention there is provided a method of reducing or preventing insufficient venting of a beverage can, the beverage can comprising a can body and a can end having a score line on said can end, the method comprising the steps of:

(a) applying a coating composition on at least an internal surface of the can end over at least a portion of the score line,

wherein the coating composition comprises a polyester material having a glass transition temperature (Tg) of at least 55°C and a second polyester material having a glass transition temperature (Tg) of up to 40°C.

According to a twelfth aspect of the present invention there is provided a method of reducing or preventing insufficient venting of a beverage can, the beverage can comprising a can body and a can end having a score line on said can end, the method comprising the steps of:

(a) applying a coating composition on at least an internal surface of the can end over at least a portion of the score line,

wherein the coating composition comprises a polyester material having a glass transition temperature (Tg) of at least 55°C and a second polyester material having a glass transition temperature (Tg) of up to 40°C, wherein the weight ratio of the first polyester to the second polyester is 99:1 to 60:40.

Suitable features of the ninth, tenth, sixth, eleventh and twelfth aspects of the present invention are as described above in relation to the first, second, third, fourth, fifth, sixth, seventh and/or eighth aspects of the present invention.

According to a thirteenth aspect of the present invention there is provided a can end of a beverage can, the can end having a score line thereon, wherein the can end is coated on at least an internal surface of the can end over at least a portion of the score line with a coating composition comprising a polyester material having a glass transition temperature (Tg) of at least 55°C.

According to a fourteenth aspect of the present invention there is provided a can end of a beverage can, the can end having a score line thereon, wherein the can end is coated on at least an internal surface of the can end over at least a portion of the score line with a coating composition comprising a polyester material having a glass transition temperature (Tg) of at least 55°C and a second polyester material.

According to a fifteenth aspect of the present invention there is provided a can end of a beverage can, the can end having a score line thereon, wherein the can end is coated on at least an internal surface of the can end over at least a portion of the score line with a coating composition comprising a polyester material having a glass transition temperature (Tg) of at least 55°C and a second polyester material having a glass transition temperature (Tg) of up to 40°C.

According to a sixteenth aspect of the present invention there is provided a can end of a beverage can, the can end having a score line thereon, wherein the can end is coated on at least an internal surface of the can end over at least a portion of the score line with a coating composition comprising a polyester material having a glass transition temperature (Tg) of at least 55°C and a second polyester material having a glass transition temperature (Tg) of up to 40°C, wherein the weight ratio of the first polyester to the second polyester is 99:1 to 60:40.

Suitable features of the thirteenth, fourteenth, fifteenth and sixteenth aspects of the present invention are as described above in relation to the first, second, third, fourth, fifth, sixth, seventh, eighth, ninth, tenth, eleventh and/or twelfth aspects of the present invention.

It will be appreciated that by the term 'an internal surface of the can end' in relation to the thirteenth, fourteenth, fifteenth and sixteenth aspects of the present invention is meant the surface of the can end which will be on the interior of a beverage can once it has been attached thereto, i.e. will form an internal surface of a beverage can once it has been attached thereto.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein. Singular encompasses plural and vice versa. For example, although reference is made herein to "a" coating composition, "a" polyester material, "an" aromatic polyacid, "the" polyester material, and the like, one or more of each of these and any other components can be used. As used herein, the term "polymer" refers to oligomers and both homopolymers and copolymers, and the prefix "poly" refers to two or more. Including, for example and like terms means including for example but not limited to.

All of the features contained herein may be combined with any of the above aspects and in any combination.

For a better understanding of the invention, and to show how embodiments of the same may be carried into effect, reference will now be made, by way of example, to the following experimental data.

**Examples**

**Polyester Example 1**

To a stainless steel beaker containing 666.77g cyclohexanone and 666.77g of SOLVESSO 150 (commercially available from Exxon Mobile) was added 801.50g Vylon GK880 (commercially available from Toyobo; a polyester having a number-average molecular weight, Mn, of 18,000 Da and a glass transition temperature, Tg, of 84°C). The Vylon GK880 was added slowly with low shear stirring. Once all the Vylon GK880 had been added, the beaker was covered and the agitation was increased to 2,000rpm. The mixture was mixed at this high speed for 2.5 hours to fully dissolve the Vylon GK880.

**Comparative Polyester Example 1**

A polyester material having the components of Table 1 was prepared according to the following method. All amounts in Table 1 are given in grams (g) unless otherwise specified.

Components 1-4 were added to a 3L round-bottom flask equipped with a nitrogen blanket, temperature probe, vigreux column, column temperature probe and condenser. The flask was heated to perform a transesterification reaction and distill methanol while maintaining a column temperature of 65°C and having a maximum batch temperature of 230°C. Once the distillation of methanol had finished, the flask was cooled to <150°C. Components 5-9 were added to the flask and the flask was heated to esterify and transesterify the reactants and distill water. The resin was processed up to 230°C and maintained a distillation temperature of 96°C. Once the acid value of the resin was <15.00 mg KOH/g, the flask was cooled to <160°C and component 10 was added. Then, the vigreux column and column temperature probe were replaced with a Dean-Stark filled with SOLVESSO 100 (commercially available from Exxon Mobile) in order to convert the distillation to an azeotropic distillation to remove the water that evolved as a byproduct to the esterification reaction. The azeotropic distillation was continued until an acid value <2.00 mg KOH/g and a viscosity of W-Z was achieved (diluted to 40% TNV in cyclohexanone). The viscosity was measured in accordance with ASTM D1545-89 ('Standard Test Method for Viscosity of Transparent Liquids by Bubble Time Method'). The resulting polyester material was then dissolved in components 11-14 to produce a resin which was about 42 percent by weight solids.

The glass transition temperature (Tg) of the resulting polyester material was 31°C.

**Table 1 - Components of comparative polyester example 1**

|  | Component | Amount / g |
|---|---|---|
| 1 | 2-methyl-1,3-propanediol | 215.80 |
| 2 | Butyl titanate (catalyst) | 1.01 |
| 3 | 2,6-naphthalene dicarboxylic acid dimethyl ester | 353.63 |
| 4 | Trimethylol propane | 4.63 |
| 5 | Isophthalic acid | 246.42 |
| 6 | 2-methyl-1,3-propanediol | 152.81 |
| 7 | Adipic acid | 132.88 |
| 8 | Maleic anhydride | 13.31 |
| 9 | Stannous octoate (catalyst) | 0.32 |
| 10 | SOLVESSO 100 * | 50.99 |
| 11 | SOLVESSO 100 * | 592.77 |
| 12 | Dibasic ester 1** | 239.36 |
| 13 | Methyl ether propylene glycol acetate | 263.22 |
| 14 | SOLVESSO 150 * | 132.66 |
| * commercially available from Exxon Mobile<br>** commercially available from Nexeo Solutions | | |

**Polyester Example 2**

A polyester material having the components of table 2 was prepared according to the following method. All amounts in Table 2 are given in grams (g) unless otherwise specified.

Components 1-4 were added to a 5L round-bottom flask equipped with a nitrogen blanket, temperature probe, vigreux column, column temperature probe, and condenser. The flask was heated to perform an esterification reaction and distill water while maintaining a column temperature of 93°C and having a maximum batch temperature of 235°C. Once the distillation of water had finished, the flask was cooled to <150°C. Then components 5-7 were added to the flask and the vigreux column and column temperature probe were replaced with a Dean-Stark filled with SOLVESSO 100 solvent. The flask was heated to 200°C. An azeotropic reflux was maintained to remove water formed from the esterification reaction until a final viscosity of Z-Z1 (25°C at 45% TNV in cyclohexanone) and acid value <7.00 mg KOH/g on solids were reached. The viscosity was measured in accordance with ASTM D1545-89 ('Standard Test Method for Viscosity of Transparent Liquids by Bubble Time Method'). The acid value was determined as described above. The resulting polyester material was then dissolved in components 8 and 9 to produce a composition which was about 42 percent by weight solids.

The glass transition temperature (Tg) of the resulting polyester material was 78°C.

**Table 2 - Components of polyester example 2**

|  | Component | Amount / g |
|---|---|---|
| 1 | 1,2-propylene glycol | 703.09 |
| 2 | Glycerol | 21.73 |

(continued)

| | Component | Amount / g |
|---|---|---|
| 3 | Terephthalic acid | 1321.12 |
| 4 | Butyl stannoic acid | 1.09 |
| 5 | Maleic anhydride | 135.09 |
| 6 | methylhydroquinone | 0.40 |
| 7 | SOLVESSO 100 * | 120.00 |
| 8 | SOLVESSO 100 * | 1481.60 |
| 9 | Dibasic ester 1 ** | 686.40 |
| * commercially available from Exxon Mobile<br>** commercially available from Nexeo Solutions | | |

**Polyester Example 3**

To a stainless steel beaker containing 1281.00g SOLVESSO 150 (commercially available from Exxon Mobile) was added 854.00g Dynapol L912 pellets (commercially available from Evonik; a polyester having a number-average molecular weight, $M_n$, of 15,000 Da and a glass transition temperature, $T_g$, of 105°C). The Dynapol L912 pellets were added slowly with low shear stirring. Once all the Dynapol L912 pellets had been added, the beaker was covered and the agitation was increased to 2,000rpm. The mixture was mixed at this high speed for 2.5 hours to fully dissolve the Dynapol L912 pellets.

**Polyester Example 4**

A phosphatised polyester material having the components of Table 3 was prepared according to the following method. All amounts in Table 3 are given in grams (g) unless otherwise specified.

Components 1-6 were added to a 5L round-bottom flask equipped with a nitrogen blanket, temperature probe, vigreux column, column temperature probe, and condenser. The flask was heated to perform an esterification reaction and distill water while maintaining a column temperature of 96°C and having a maximum batch temperature of 200°C. Once the distillation of water had finished and an acid value <13.00 mg KOH/g had been reached, the flask was cooled to <110°C and components 7-9 were added to the flask. Then, the vigreux column and column temperature probe were replaced with a Dean-Stark filled with SOLVESSO 100. An azeotropic distillation was performed until a viscosity of U-W was achieved (diluted to 50% TNV using a 10:1 monobutyl ether of diethylene glycol:2-butoxyethanol solution). The viscosity was measured in accordance with ASTM D1545-89 ('Standard Test Method for Viscosity of Transparent Liquids by Bubble Time Method'). The resulting phosphatized polyester material was then dissolved in components 10 and 11 to produce a resin which was about 50 percent by weight solids.

The glass transition temperature ($T_g$) of the resulting polyester material was -5°C.

**Table 3 - Components of polyester example 4**

| | Component | Amount / g |
|---|---|---|
| 1 | 2-methyl-1,3-propanediol | 799.74 |
| 2 | Stannous octoate (catalyst) | 0.96 |
| 3 | Trimethylol propane | 120.99 |
| 4 | Phthalic anhydride | 293.43 |
| 5 | Isophthalic acid | 576.92 |
| 6 | Maleic anhydride | 335.29 |
| 7 | SOLVESSO 100 | 312.94 |
| 8 | 85% phosphoric acid | 44.71 |
| 9 | Deionised water | 16.32 |

(continued)

| | Component | Amount / g |
|---|---|---|
| 10 | 2-butoxyethannol | 155.41 |
| 11 | Diethylene glycol monobutyl ether | 1343.30 |

**Coating Composition Examples 1 to 3**

Coating compositions 1 to 3 were prepared according to the formulation in Table 4. All amounts are given in grams (g) unless otherwise specified.

**Comparative Coating Composition 1**

Comparative Coating composition 1 was prepared according to the formulation in Table 4. All amounts are given in grams (g) unless otherwise specified.

**Coating Composition Examples 4 to 5**

Coating compositions 4 to 5 were prepared according to the formulation in Table 5. All amounts are given in grams (g) unless otherwise specified.

**Table 4 - Formulation of Coating Compositions 1 to 3 and Comparative Coating Composition 1**

| | Coating composition example 1 | Coating composition example 2 | Coating composition example 3 | Comparative coating composition 1 |
|---|---|---|---|---|
| Polyester example 1 | 570.81 | - | - | - |
| Comparative polyester example 2 | - | - | - | 510.17 |
| Polyester example 2 | - | 58.4 | - | - |
| Polyester example 3 | - | - | 58.7 | - |
| Polyester example 4 | 21.59 | 2.55 | 2.55 | 21.59 |
| ProHere L 90700 [1] | 12.33 | 1.42 | 1.42 | 12.33 |
| 2-butoxyethyl acetate | 60.28 | 6.95 | 6.95 | 60.28 |
| Maprenal BF 892/68B [2] | 63.48 | 7.32 | 7.32 | 63.48 |
| Lanco TF1780 EF [3] | 0.51 | 0.06 | 0.06 | 0.51 |
| SOLVESSO 100 [4] | 26.16 | 3.02 | 3.02 | 26.16 |
| Dynoadd F-300 [5] | 0.55 | 0.06 | 0.06 | 0.55 |
| SOLVESSO 150 [4] | 54.39 | 20.09 | 19.69 | 136.66 |

(continued)

|  | Coating composition example 1 | Coating composition example 2 | Coating composition example 3 | Comparative coating composition 1 |
|---|---|---|---|---|
| Cyclohexanone | 54.39 | - | - | - |

[1] Carnauba wax dispersion commercially available from Michelman, Inc.
[2] methylol type, highly reactive n-butylated benzoguanamine-formaldehyde resin commercially available from Ineos
[3] PTFE-modified polyethylene wax commercially available from Lubrizol Advanced Materials, Inc.
[4] Commercially available from Exxon Mobil
[5] Additive commercially available from Dynea

**Test Panel Preparation:** Coating examples 1 to 3 and comparative example 1 were drawn down with a wire wound bar over zirconium-treated aluminum (0.0082 inch) to give a dry film weight of 6.5-7.5 milligrams/square inch (msi). The panels were then baked in a three zone coil oven (249/326/293°C) to a peak metal temperature of 240°C. The coated panels were then stored for 12 weeks at 38°C before being stamped and scored into CDL-type can ends.
The properties of the coating compositions were then tested by the following methods. The results are shown in Table 5.
**Liquor 85 Test Pack (L-85):** An L-85 stock solution was prepared as follows:

| Deionized Water | 917.3 grams |
|---|---|
| Citric Acid | 92.0 grams |
| 85% Phosphoric Acid | 33.3 grams |
| NaCl (with no iodine) | 71.0 grams |

47 grams of the stock solution was added to a 12 ounce aluminum beverage can followed by 308 grams of carbonated water (also known as sparkling water). A CDL seamer was then used to seam the can ends onto the body of the can. The cans were then placed upside down into a 38°C incubator for a period of 10 days. After 10 days, the cans were removed from the incubator and the can was punctured at the bottom to empty the liquid. The can was then cut about 10 mm below the necked area of the can. The enamel rating of the ends were then measured using the Waco Enamel Rater test described below. An acceptable enamel rating after L-85 pack testing is less than 10 mA and preferably less than 5 mA.
**WACO Enamel Rater Test:** The WACO Enamel Rater test determines the integrity of a fabricated can end by quantifying metal exposure. The panels were stamped into CDL-type can ends. The ends were secured by vacuum to the electrolyte-filled and electrode-containing end fixture. Fixture and specimen were inverted so that the electrode and the product side of the end came into contact with the electrolyte solution and the edge of the sample contacted a metal chisel, completing the circuit. The instrument then applied a constant voltage (normally 6.3 VDC) across the coated surface and measured the resulting current (mA) at the industry standard of 4 seconds duration. The magnitude of the reading is directly proportional to the amount of exposed metal in the test sample. A low reading is desirable since that indicates there is very little exposed metal on the end.
**Eversion Test:** Eversion testing was used to determine the degree of venting. The contents of a 12 ounce (340g) can of soda which had been cooled to 1.5°C overnight was gently transferred into an empty 12 ounce (340g) beverage can. A CDL seamer was then used to seam the can ends onto the body of the can. The cans were placed upside down (i.e. with the can end being tested being at the bottom) in an incubator and incubated at 38°C for 18 hours. After this time, the cans were removed from the incubator and transferred to a fume hood. A can opener or screwdriver was then used to gently leverage the pull tab of the can end. If a metal crack sound is heard with the pressure release 'hiss', there is no eversion and sufficient venting has occurred. This is considered to be a pass. If a metal crack sound is heard but the pressure is not released, there is eversion and sufficient venting has not occurred. This is considered to be a failure. The test is repeated a number of times and the number of failures is recorded. For example, 2 failures out of 16 test repeats would be recorded as 2/16.
**Glass transition temperature (Tg):** The Tg of polyesters was measured using differential scanning calorimetry (DSC) using a Perkin Elmer Differential Scanning Calorimeter with a 10°C/min heating rate. The sample was placed in the machine and heated from 30°C to 180°C followed by a cooling ramp from 180°C to -50°C. Then, the sample was re-heated to 180°C. The Tg data was determined from the second heating ramp (i.e. form -50°C to 180°C). The Tg value was determined by the machine software installed by Perkin Elmer.

**Table 5 - Test Results**

| | Panels stored for 12 weeks at 38°C at 80% humidity | | |
| --- | --- | --- | --- |
| | Liquor 85 Test Pack / mA | Eversion | Tg of polyester resin(s) / °C |
| Coating Example 1 | 3.14 | 0/24 | 84 / -5 |
| Coating Example 2 | - | 0/30 | 78 / -5 |
| Coating Example 3 | - | 0/30 | 105 / -5 |
| Comparative Example 1 | 4.0 | 24/24 | 31 / -5 |

The examples show that coatings containing a polyester having a glass transition temperature (Tg) as the major polyester component according to the present invention exhibit improved venting compared to the comparative example(s).

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

Certain aspects of the invention may be combined in the following combinations:

1. Use of a coating composition in the reduction or prevention of insufficient venting of a beverage can, the beverage can comprising a can body and a can end having a score line on said can end, wherein the coating composition comprises a polyester material having a glass transition temperature (Tg) of at least 55°C, and wherein the coating composition is applied to at least the internal surface of the can end over at least a portion of the score line.

2. Use of a coating composition according to aspect 1, wherein the coating composition has a Young's modulus of 0.5 to 3 gigapascal (GPa)

3. Use of a coating composition according to any of aspects 1 or 2, wherein the polyester material comprises the reaction product of a polyacid and a polyol.

4. Use of a coating composition according to any of aspects 1 to 3, wherein the polyacid comprises an aromatic polyacid.

5. Use of a coating composition according to any of aspects 1 to 4, wherein the aromatic polyacid comprises terephthalic acid, isophthalic acid, esters and anhydrides of the aforementioned acids and combinations thereof.

6. Use of a coating composition according to any of aspects 1 to 5, wherein the polyol comprises cyclohexanedimethanol, 2-methyl-1,3-propanediol, ethylene glycol and combinations thereof.

7. Use of a coating according to any of aspects 1 to 6, wherein the polyester material has a glass transition temperature (Tg) from 55 to 200°C.

8. Use of a coating composition according to aspect 7, wherein the polyester material has a glass transition temperature (Tg) from 80 to 90°C.

9. Use of a coating composition according to any of aspects 1 to 8, wherein the polyester material has an Mn from 500 to 250,000 Da.

10. Use of a coating composition according to any of aspects 1 to 9, wherein the polyester material has a hydroxyl value (OHV) from 0 to 150 mg KOH/g.

11. Use of a coating composition according to any of aspects 1 to 10, wherein the polyester material has an acid number (AN) from 0 to 150 mg KOH/g.

12. Use of a coating composition according to any of aspects 1 to 11, wherein the polyester material comprises the reaction product of;

> (i) 1,2-propanediol,
> (ii) terephthalic acid, and
> (iii) a molecular weight increasing agent,

wherein the polyester material has a number-average molecular weight (Mn) of at least 6,100 Da and a glass transition temperature (Tg) of at least 80 °C.

13. Use of a coating composition according to any of aspects 1 to 13, wherein the coating composition comprises a second polyester material.

14. Use of a coating composition according to aspect 13, wherein the second polyester material comprises a phosphatised polyester.

15. Use of a coating composition according to any of aspects 13 or 14, wherein the second polyester material has a glass transition temperature (Tg) of up to 40°C.

16. Use of a coating composition according to any of aspects 13 to 15, wherein the second polyester material has a glass transition temperature (Tg) from -200°C to 40°C.

17. Use of a coating composition according to aspect 16, wherein the second polyester material has a glass transition temperature (Tg) from 10 to 0°C.

18. Use of a coating composition according to any of aspects 13 to 17, wherein the second polyester material has an Mn from 250 to 250,000 Da.

19. Use of a coating composition according to any of aspects 13 to 18, wherein the second polyester material has a hydroxyl value (OHV) from 0 to 250 mg KOH/g

20. Use of a coating composition according to any of aspects 13 to 19, wherein the second polyester material has an acid number (AN) from 0 to 150 mg KOH/g.

21. Use of a coating composition according to any of aspects 13 to 20, wherein the weight ratio of the first polyester material to the second polyester material is 99:1 to 60:40.

22. Use of a coating composition according to any of aspects 1 to 20 wherein the coating composition comprises a crosslinking material.

23. Use of a coating composition according to aspect 22, wherein the crosslinking material comprises benzoguanamine or a derivative thereof.

24. A method of reducing or preventing insufficient venting of a beverage can, the beverage can comprising a can body and a can end having a score line on said can end, the method comprising the steps of:

> (a) applying a coating composition on at least an internal surface of the can end over at least a portion of the score line,

wherein the coating composition comprises a polyester material having a glass transition temperature (Tg) of at least 55°C.

25. A method of reducing or preventing insufficient venting of a beverage can according to aspect 24, wherein the coating composition comprises a second polyester material.

26. A method of reducing or preventing insufficient venting of a beverage can according to aspect 25, wherein the second polyester material has a glass transition temperature (Tg) of up to 40°C.

27. A method of reducing or preventing insufficient venting of a beverage can according to any of aspects 25 to 26, wherein the weight ratio of the first polyester to the second polyester is 99:1 to 60:40.

28. A can end of a beverage can, the can end having a score line thereon, wherein the can end is coated on at least an internal surface of the can end over at least a portion of the score line with a coating composition comprising a polyester material having a glass transition temperature (Tg) of at least 55°C.

29. A can end according to aspect 28, wherein the coating composition comprises a second polyester material.

30. A can end according to aspect 29, wherein the second polyester material has a glass transition temperature (Tg) of up to 40°C.

31. A can end according to any of aspects 28 or 29, wherein the weight ratio of the first polyester to the second polyester is 99:1 to 60:40.

**Claims**

1. Use of a coating composition in the reduction or prevention of insufficient venting of a beverage can, the beverage can comprising a can body and a can end having a score line on said can end, wherein the coating composition comprises a polyester material having a glass transition temperature (Tg) of at least 55°C, and wherein the coating composition is applied to at least the internal surface of the can end over at least a portion of the score line.

2. Use of a coating composition according to claim 1, wherein the coating composition has a Young's modulus of 0.5 to 3 gigapascal (GPa).

3. Use of a coating composition according to claim 1 or 2, wherein the polyester material comprises the reaction product of a polyacid and a polyol.

4. Use of a coating composition according to claim 3, wherein the polyacid comprises an aromatic polyacid.

5. Use of a coating composition according to claim 4, wherein the aromatic polyacid comprises terephthalic acid, isophthalic acid, esters and anhydrides of the aforementioned acids and combinations thereof.

6. Use of a coating composition according to claims 3 to 5, wherein the polyol comprises cyclohexanedimethanol, 2-methyl-1,3-propanediol, ethylene glycol and combinations thereof.

7. Use of a coating composition according to claim 1 to 6, wherein the polyester material has a glass transition temperature (Tg) from 80 to 90°C.

8. Use of a coating composition according to claims 1 to 7, wherein the coating composition comprises a second polyester material.

9. Use of a coating composition according to claim 8, wherein the second polyester material comprises a phosphatised polyester.

10. Use of a coating composition according to claims 8 or 9, wherein the second polyester material has a glass transition temperature (Tg) of up to 40°C.

11. Use of a coating composition according to claim 10, wherein the second polyester material has a glass transition temperature (Tg) from 10 to 0°C.

12. Use of a coating composition according to claims 8 to 11, wherein the weight ratio of the first polyester material to the second polyester material is 99:1 to 60:40.

13. Use of a coating composition according to claims 1 to 12 wherein the coating composition comprises a crosslinking material.

14. A method of reducing or preventing insufficient venting of a beverage can, the beverage can comprising a can body and a can end having a score line on said can end, the method comprising the steps of:

(a) applying a coating composition on at least an internal surface of the can end over at least a portion of the score line,

wherein the coating composition comprises a polyester material having a glass transition temperature (Tg) of at least 55°C.

15. A can end of a beverage can, the can end having a score line thereon, wherein the can end is coated on at least an internal surface of the can end over at least a portion of the score line with a coating composition comprising a polyester material having a glass transition temperature (Tg) of at least 55°C.

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/013240 A1 (VALSPAR SOURCING INC [US]; PAREKH GIRISH G [US]; BARTLEY III GEORGE K) 12 February 2004 (2004-02-12) | 14,15 | INV. B65D85/72 C09D167/02 |
| A | * examples 3,8 * | 1-13 | B65D25/14 |
| Y | US 4 890 759 A (SCANGA THEODORE P [US] ET AL) 2 January 1990 (1990-01-02) * column 8; figures 4a,4b * | 14,15 | |
| Y | EP 0 312 311 A1 (MB GROUP PLC [GB]) 19 April 1989 (1989-04-19) * columns 6,7; figures 2,3 * | 14,15 | |

TECHNICAL FIELDS
SEARCHED (IPC)

B65D
C09D

The present search report has been drawn up for all claims

| Place of search | Date of completion of the search | Examiner |
|---|---|---|
| The Hague | 30 January 2018 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 9078

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2018

| Patent document cited in search report | | | Publication date | Patent family member(s) | | | Publication date |
|---|---|---|---|---|---|---|---|
| WO 2004013240 | A1 | | 12-02-2004 | AT | 432967 | T | 15-06-2009 |
| | | | | AU | 2003265337 | A1 | 23-02-2004 |
| | | | | BR | 0313103 | A | 21-06-2005 |
| | | | | CA | 2493986 | A1 | 12-02-2004 |
| | | | | CN | 1717460 | A | 04-01-2006 |
| | | | | EP | 1546273 | A1 | 29-06-2005 |
| | | | | EP | 2128209 | A1 | 02-12-2009 |
| | | | | ES | 2327917 | T3 | 05-11-2009 |
| | | | | ES | 2564524 | T3 | 23-03-2016 |
| | | | | JP | 4648000 | B2 | 09-03-2011 |
| | | | | JP | 2006501108 | A | 12-01-2006 |
| | | | | JP | 2011016360 | A | 27-01-2011 |
| | | | | MX | 343223 | B | 28-10-2016 |
| | | | | MX | PA05001154 | A | 16-05-2005 |
| | | | | US | 2006093768 | A1 | 04-05-2006 |
| | | | | US | 2012135151 | A1 | 31-05-2012 |
| | | | | US | 2012318699 | A1 | 20-12-2012 |
| | | | | US | 2014338290 | A1 | 20-11-2014 |
| | | | | US | 2017321082 | A1 | 09-11-2017 |
| | | | | WO | 2004013240 | A1 | 12-02-2004 |
| US 4890759 | A | | 02-01-1990 | BR | 9000326 | A | 27-11-1990 |
| | | | | CA | 2008012 | A1 | 26-07-1990 |
| | | | | GB | 2227474 | A | 01-08-1990 |
| | | | | JP | H02269649 | A | 05-11-1990 |
| | | | | MX | 167354 | B | 18-03-1993 |
| | | | | US | 4890759 | A | 02-01-1990 |
| EP 0312311 | A1 | | 19-04-1989 | AU | 602616 | B2 | 12-10-1988 |
| | | | | BG | 60009 | A3 | 15-06-1993 |
| | | | | BR | 8807254 | A | 31-10-1989 |
| | | | | CA | 1311699 | C | 22-12-1992 |
| | | | | CN | 1033603 | A | 05-07-1989 |
| | | | | DD | 285319 | A5 | 12-12-1990 |
| | | | | DE | 3867025 | D1 | 30-01-1992 |
| | | | | DK | 292489 | A | 07-08-1989 |
| | | | | EP | 0312311 | A1 | 19-04-1989 |
| | | | | ES | 2028301 | T3 | 01-07-1992 |
| | | | | FI | 892899 | A | 14-06-1989 |
| | | | | GB | 2211164 | A | 28-06-1989 |
| | | | | GR | 3003756 | T3 | 16-03-1993 |
| | | | | HK | 89991 | A | 22-11-1991 |
| | | | | HU | 205736 | B | 29-06-1992 |
| | | | | JP | H0777903 | B2 | 23-08-1995 |
| | | | | JP | H02501652 | A | 07-06-1990 |
| | | | | NZ | 226539 | A | 26-04-1990 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 17 18 9078

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2018

| Patent document cited in search report | Publication date | Patent family member(s) | | Publication date |
|---|---|---|---|---|
| | | PL | 275220 A1 | 12-06-1989 |
| | | PT | 88736 A | 31-07-1989 |
| | | TR | 23930 A | 20-12-1990 |
| | | TR | 24070 A | 28-02-1991 |
| | | TR | 26797 A | 08-08-1994 |
| | | US | 4946063 A | 07-08-1990 |
| | | WO | 8903350 A1 | 20-04-1989 |
| | | YU | 190688 A | 28-02-1991 |
| | | ZA | 8807617 B | 28-06-1989 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8614286 B

**Non-patent literature cited in the description**

- **ZENO WICKS, JR. ; FRANK N. JONES ; S. PETER PAPPAS.** Organic Coatings: Science and Technology. John Wiley & Sons, 1992, vol. 1, 122-132
- The Chemistry and Application of Phenolic Resins or Phenoplasts. John Wiley and Sons/Cita Technology Limited, 1997, vol. V

- The Chemistry and Applications of Amino Crosslinking agents or Aminoplast. John Wiley & Sons/Cita Technology Limited, 1998, vol. V, 21 ff